# EUROPEAN PATENT APPLICATION

(11) **EP 1 909 121 A1**
(43) Date of publication of application: **09.04.2008**
(21) Application number: 06781490.5
(22) Date of filing: 24.07.2006
(51) Int. Cl.: G02B 5/30, G02F 1/1335

(54) **GRID POLARIZER AND METHOD FOR MANUFACTURING SAME**

(30) Priority: 22.07.2005 JP 2005213100; 22.07.2005 JP 2005213101; 22.07.2005 JP 2005213102
(71) Applicant: Zeon Corporation, Tokyo 100-8246 (JP)
(72) Inventor: MURAKAMI, Toshihide, c/o ZEON CORPORATION, Tokyo 100-8246 (JP); SHIBUYA, Akiyoshi, c/o ZEON CORPORATION, Tokyo 100-8246 (JP)
(74) Representative: Albrecht, Thomas
(86) International application number: PCT/JP2006/314578
(87) International publication number: WO 2007/011047

(57) **Abstract**

A grid polarizer comprising a first layer composed of a transparent material, a third layer composed of a transparent material, and a second layer laminated between the first layer and the third layer, the second layer having a plurality of layers A extended in an elongated linear state and a plurality of layers B extended in an elongated linear state, in which the layers A and the layers B are alternately arranged side by side, the layers A extended in an elongated linear state comprise a material with an absolute value of a difference between a real part n and an imaginary part K in a complex refractive index (N = n - iK) at 1.0 or more, the layers B extended in the elongated linear state comprise a gas, and the third layer is connected to the layers A through a chemical compound having a reactive group bindable with an inorganic material and a reactive group bindable with an organic material, comprises a transparent inorganic oxide or a transparent inorganic nitride, or comprises a porous substance.

## Description

### TECHNICAL FIELD

The present invention relates to a grid polarizer and a method for manufacturing the same used in optical communications, optical recordings, sensors, image displays and the like, and more particularly to a grid polarizer and a method for manufacturing the same which has scratch durability, antifouling property, and sufficient flexibility and strength.

### BACKGROUND ART

A grid polarizer has been known as a polarizer which can freely set a polarization plane. This is an optical element having a grid structure in which a large number of linear metal wires are arranged in parallel in a constant cycle. In the case of such a metal grid structure, if the grid cycle is shorter than a wavelength of an incident light, a polarized light parallel with the linear metal forming the grid structure is reflected while a polarized light perpendicular to the linear metal transmits, which functions as a polarizer creating a uniaxial polarized light. Use of this grid polarizer as an optical element of an isolator in optical communication or as a part for increasing a utilization rate of light and for improving brightness in a liquid crystal display is proposed.

In Patent Document 1, as shown in Fig. 31, a polarizer, which is an embedded wire grid polarizer for visible spectrum, is proposed that comprises a first layer 410 having a given refractive index, a second layer 413 separated from the first layer and having a given refractive index, and an array 411 of elongated elements separated in parallel and held between the first layer and the second layer and having a plurality of gaps 412 formed between the elements in which the gap provides a refractive index lower than the refractive index of the first layer. The Patent Document 1 discloses that the gap 412 can be filled with air, vacuum, water, magnesium fluoride, oil, and hydrocarbon. The grid polarizer in Patent Document 1, the first layer 411 as well as the second layer 413 and the array 411 are bonded through a low refractive-index substance such as magnesium fluoride.

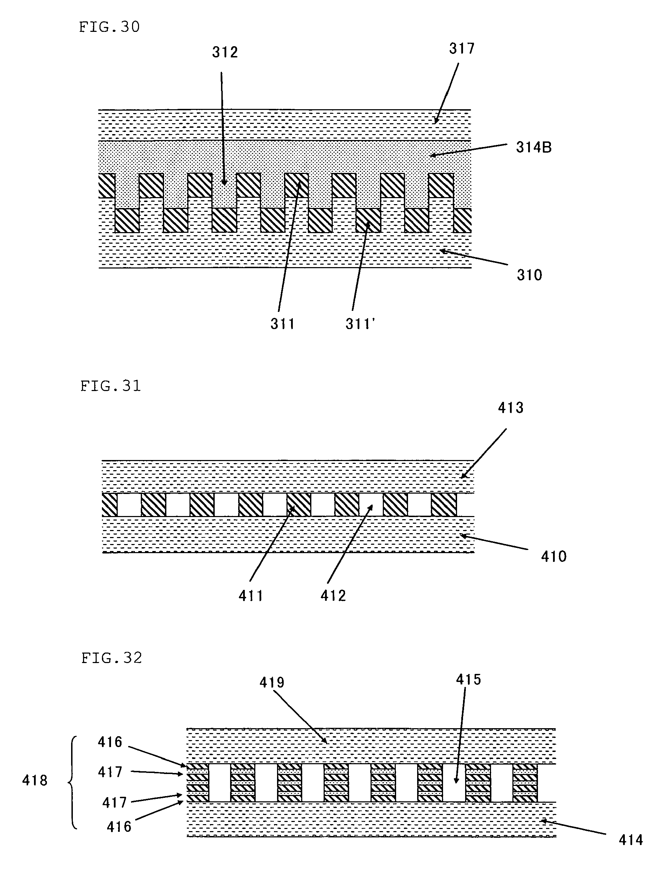

Patent Document 2 discloses an embedded wire grid polarizer for polarizing incident light beam as shown in Fig. 32, in which the polarizer comprises a base material 414 having one surface and a row of complex wires 418 arranged on the surface and separated by a grid interval smaller than the wavelength of the incident light, and each of groove portions 415 between the complex wires 418 is filled with optical dielectric material, each of the complex wires has an in-wire lower structure comprising alternated elongated metal layers 416 and elongated dielectric layers 417, and the in-wire lower structure constituted by the alternated elongated metal wire 416 and the elongated dielectric layer 417 has at least the two elongated metal wires 416. In the Patent Document 2, as the optical dielectric material to be filled in the groove portions 415, air, optically transparent liquid, adhesive or gel are cited. A dielectric element 419 is laminated on the complex wire. The dielectric element 419 and the complex wire are bonded through another dielectric element.

Patent Document 3 discloses a polarizing device having a polarizer as shown in Fig. 33, in which the polarizer comprises an optically transparent substrate 420, a grid wire 421 sensitive to an ambient environment arranged on the substrate, and a sealed surrounding element 423 for surrounding the polarizer, in which the surrounding element has an inactive atmosphere in order to protect the polarizing element from the ambient environment. As the inactive atmosphere, vacuum and an inert gas are disclosed. The sealed surrounding element is provided through a spacer 424 mounted on the side portion of the polarizer not so as to contact the grid wire.

Patent Document 1: Japanese Patent Laid-Open No. 2003-519818 (U.S.Patent No. 6,288,840)
Patent Document 2: Japanese Patent Laid-Open No. 2004-280050 (U.S.Patent No. 6,665,119)
Patent Document 3: Japanese Patent Laid-Open No. 2005-513547 (U.S.Patent Publication No. 2003-117708)

### DISCLOSURE OF THE INVENTION

### PROBLEMS TO BE SOLVED BY THE INVENTION

An object of the present invention is to provide a grid polarizer having scratch durability, antifouling property, and sufficient flexibility and strength.

### MEANS FOR SOLVING THE PROBLEMS

The inventors have found, after examination in order to achieve the goal, that a grid polarizer having scratch durability, antifouling property, and sufficient flexibility and strength can be obtained by comprising a first layer composed of a transparent material and a second layer laminated on the first layer, in which the second layer has a plurality of layers A extended in an elongated linear state and a plurality of layers B extended in an elongated linear state, in which the layers A and the layers B are arranged alternately side by side, the layers A comprises a material being 1.0 or more in an absolute value of a difference between a real part n and an imaginary part K in a complex refractive index (N = n - iK) and the layers B comprises a porous substance.

Also, it was found out that a grid polarizer having scratch durability, antifouling property, and sufficient flexibility and strength can be obtained by forming a plurality of layers A comprising a material being 1.0 or more in an absolute value of a difference between a real part n and an imaginary part K in a complex refractive index (N = n - iK) extended in an elongated linear state to be separately arranged side by side on a principal surface of a first layer composed of a transparent material, and then by vapor-deposition onto the principal surface of the first layer from an oblique direction to form a third layer which results in bridging between the top portions of the adjacent layers and blocking an opening of a groove portion walled between the layers A so that air or an inert gas is filled in a space framed by the first layer, the layers A and the third layer.

Moreover, it was found out that a grid polarizer having scratch durability, antifouling property, and sufficient flexibility and strength can be obtained by connecting the first layer and / or the third layer through a chemical compound having a reactive group for binding the A layer with an inorganic material and a reactive group bindable with an organic material.
The present invention has been completed as the result of further examinations based on the above findings.

The present invention includes the following.
(1) A grid polarizer comprising a first layer composed of a transparent material, a third layer composed of a transparent material, and a second layer between the first layer and the third layer, in which the second layer has a plurality of layers A extended in an elongated linear state and a plurality of layers B extended in an elongated linear state, in which the layers A and the layers B are alternately arranged side by side, the layers A comprise a material being 1.0 or more in an absolute value of a difference between a real part n and an imaginary part K in a complex refractive index (N = n - iK), the layers B comprise a gas, and the third layer is connected to the layers A through a chemical compound having a reactive group bindable with an inorganic material and a reactive group bindable with an organic material, comprises a transparent inorganic oxide or a transparent inorganic nitride, or comprises a porous substance.

(2) A grid polarizer comprising a first layer composed of a transparent material, a third layer composed of a transparent material, and a second layer between the first layer and the third layer, in which the first layer has a plurality of ridge portions on the surface thereof in which the ridges are extended in an elongated linear state and arranged side by side and separately from each other, the second layer has a layer A extended in an elongated linear state on the top face of each of the ridge portions and along the ridge portions, and a layer B extended in an elongated linear state in the groove portion walled between the adjacent layers A and the ridge portions, in which the layers A and the layers B are alternately arranged in plural side by side, the layers A comprise a material being 1.0 or more in an absolute value of a difference between a real part n and an imaginary part K in a complex refractive index (N = n - iK), and the layers B comprise a gas, and the third layer is connected to the layers A through a chemical compound having a reactive group bindable with an inorganic material and a reactive group bindable with an organic material, comprises a transparent inorganic oxide or a transparent inorganic nitride, or comprises a porous substance.

(3) The grid polarizer according to (2), further comprising a layer A' extended in an elongated linear state on the bottom face of each the groove portions, in which the layers A' comprise a material being 1.0 or more in an absolute value of a difference between a real part n and an imaginary part K in a complex refractive index (N = n - iK).
(4) The grid polarizer according to any one of (1) to (3), in which the layers B comprise a porous substance which has a hollows filled with a gas.
(5) The grid polarizer according to (4), in which the third layer comprises a porous substance, and the third layer continues into the layers B without a boundary.
(6) The grid polarizer according to any one of (1) to (4), in which the third layer comprises a resin.
(7) The grid polarizer according to any one of (1) to (6), further comprising a fourth layer comprising a resin, in which the first layer, the second layer, the third layer, and the fourth layer are laminated in this order.

(8) The grid polarizer according to any one of (1) to (3), in which the layer B is a layer filled with air or inert gas in a space framed by the first layer, the layers A and the third layer.
(9) The grid polarizer according to (8), in which the third layer comprises an inorganic oxide or an inorganic nitride.
(10) The grid polarizer according to any one of (1) to (9), in which the layer A is connected to the first layer and / or the third layer through the chemical compound having a reactive group bindable with an inorganic material and a reactive group bindable with an organic material.
(11) The grid polarizer according to any one of (1) to (10), in which the first layer comprises a resin.

(12) A polarizing element comprising a laminate of the grid polarizer according to any one of (1) to (11) and another polarizing optical element.
(13) The polarizing element according to (12), in which the another polarizing optical element is an absorption-type polarizer in which a polarizing transmission axis of the grid polarizer and a polarizing transmission axis of the absorption-type polarizer are practically parallel.
(14) A liquid crystal display comprising the grid polarizer according to any one of (1) to (11).

(15) A manufacturing method of a grid polarizer comprising air or inert gas filled in a space framed by a first layer, layers A and a third layer which comprises steps of:
forming a plurality of the layers A comprising a material being 1.0 or more in an absolute value of a difference between a real part n and an imaginary part K in a complex refractive index (N = n - iK), in which the layers A are extended in an elongated linear state and separately arranged side by side on the principal surface of the first layer composed of a transparent material; and
forming the third layer bridging between the tops of the adjacent layers A in a separate state by vapor-deposition of an inorganic oxide or an inorganic nitride onto the principal surface of the first layer from an oblique direction.

(16) A manufacturing method of a grid polarizer comprising air or inert gas filled in a space framed by a first layer, layers A and a third layer which comprises steps of:
forming the layer A comprising a material being 1.0 or more in an absolute value of a difference between a real part n and an imaginary part K in a complex refractive index (N = n - iK) on the top face of a ridge and along the ridge in which a plurality of the ridges are extended in an elongated linear state arranged side by side on the surface of the first layer composed of a transparent material, and
forming the third layer bridging between the tops of the adjacent layers A in a separate state by vapor-deposition of an inorganic oxide or an inorganic nitride onto the principal surface of the first layer from an oblique direction.

(17) A grid polarizer comprising a first layer composed of a transparent material and a second layer laminated on the first layer, in which the second layer has a layer A extended in an elongated linear state and a layer B in an elongated linear state, in which a plurality of the layers A and a plurality of the layers B are alternately arranged side by side, the layer A comprises a material being 1.0 or more in an absolute value of a difference between a real part n and an imaginary part K in a complex refractive index (N = n - iK), and the layer B comprises a porous substance.
(18) A grid polarizer comprising a first layer composed of a transparent material and a second layer laminated on the first layer, in which the first layer has a plurality of ridge portions extended in an elongated linear state formed side by side and separately from each other on the surface thereof, the second layer has a layer A extended in an elongated linear state on a top face of each of the ridge portions and along the ridge portions and a layer B extended in an elongated linear state in a groove portions walled between the adjacent layers A and the ridge portions, in which the layers A and the layers B are alternately arranged side by side, the layer A comprises a material being 1.0 or more in an absolute value of a difference between a real part n and an imaginary part K in a complex refractive index (N = n - iK), the layer B comprises a porous substance.
(19) The grid polarizer according to (18), further comprising a layer A' extended in an elongated linear state on the bottom face of the groove portions, in which the layer A' comprises a material being 1.0 or more in an absolute value of a difference between a real part n and an imaginary part K in a complex refractive index (N = n - iK).
(20) The grid polarizer according to any one of (17) to (19), further comprising a third layer comprising a porous substance, in which the first layer, the second layer, and the third layer are laminated in this order, and the third layer continues into the layers B extended in the elongated linear state without a boundary.
(21) The grid polarizer according to any one of (17) to (20), further comprising a fourth layer comprising a resin, in which the first layer, the second layer, the third layer, and the fourth layer are laminated in this order.

In the present specification, the terms "no less than" and "no more than" include the boundary values. The terms "less than" and "more than" do not include the boundary values. The boundary values in a range indicated by "-"(... to ...) are included in the range.

The first layer and the third layer constituting the grid polarizer of the present invention are not particularly limited as long as they are composed of a transparent material.
The transparent materials include glass, inorganic oxides, inorganic nitrides, porous substances, transparent resins and the like. And the first layer is preferably composed of a transparent resin, considering flexibility. The transparent resin has a glass transition temperature of preferably 60 to 200°C, and more preferably 100 to 180°C from the viewpoint of workability. The glass transition temperature can be measured by differential scanning calorimetry (DSC).

Specific examples of the transparent resin include polycarbonate resin, polyethersulphone resin, polyethylene terephthalate resin, polyimide resin, polymethylmethacrylate resin, polysulphone resin, polyarylate resin, polyethylene resin, polyvinyl chloride resin, cellulose diacetate, cellulose triacetate, alicyclic olefin polymer and the like. Among them, alicyclic olefin polymer is suitable from the viewpoint of transparency, low hygroscopicity, dimensional stability, and workability. As alicyclic olefin polymer, cyclic olefin random multi-component copolymer described in Japanese Patent Laid-open No. 05-310845, hydrogenated polymer described in Japanese Patent Laid-open No. 05-97978 and thermoplastic dicyclopentadiene ring-opening polymer and its hydrogenated products described in Japanese Patent Laid-Open No. 11-124429 (U.S. Patent No. 6,511,756 corresponding thereto) can be mentioned.

The transparent resin used in the present invention may be compounded with additives such as coloring agent such as pigment and dye, fluorescent brightening agent, dispersing agent, heat stabilizer, light stabilizer, ultraviolet absorbing agent, antistatic agent, antioxidant, lubricant, and solvent as appropriate.
The first layer comprising a transparent resin can be obtained by molding the transparent resin by a known method. The molding methods include cast molding, extrusion molding, inflation molding and the like, for example.

If the first layer and the third layer are formed by a transparent resin sheet or film, average thicknesses of the first and third layers are usually 5 µm to 1 mm, and more preferably 20 to 200 µm in view of handling. The first and third layers are 80 % or more in light transmittance in a visible region of 400 to 700 nm and have a smooth surface.
Also, if the first layer and the third layer are formed by a transparent resin sheet or film, the first layer and / or the third layer are / is not particularly limited by retardation Re at the wavelength of 550 nm (a value defined by Re = d × (nₓ - n_{y}). nₓ and n_{y} are in-plane principal refractive index of the first layer or the third layer (nₓ ≧ n_{y}); d is an average thickness of the first layer or the third layer). The difference between the retardation Re in arbitrary two points in a plane, uneven retardation, is preferably 10 nm or less, and more preferably 5 nm or less. If the uneven retardation is large, brightness on the display surface may be easily fluctuated when used in a liquid crystal display.

According to an aspect of the grid polarizer in the present invention, the third layer is composed of an inorganic oxide or inorganic nitride, and the inorganic oxide or inorganic nitride having a low refractive index is preferable.
Specific examples of the inorganic oxide or inorganic nitride include silicon oxide, aluminum oxide, magnesium oxide, titanium oxide, zinc oxide, zirconium oxide, silicon nitride, aluminum nitride and the like.
If the inorganic oxide or inorganic nitride is used as the transparent material forming the third layer, the thickness of the third layer is not particularly limited but it is preferably 5 to 500 nm, and more preferably 10 to 300 nm.

According to another aspect of the grid polarizer in the present invention, the third layer is composed of a porous substance.
Specific examples of the porous substance include those similar to the porous substances described as specific examples of the layer B which will be described later.
If the porous substance is used as a transparent material forming the third layer, the thickness of the third layer is not particularly limited but it is preferably 5 to 500 nm, and more preferably 10 to 300 nm.

The second layer constituting the grid polarizer in the present invention has the layers A extended in the elongated linear state and the layers B extended in the elongated linear state, and the layers A and the layers B are arranged alternately in plural side by side and laminated on the first layer.

The layer A extended in the elongated linear state comprises a material being 1.0 or more in an absolute value of a difference between a real part n and an imaginary part K in complex refractive index (N = n-iK). The material can be selected as appropriate from materials in which either of the real part or the imaginary part in a complex refractive index is larger than the other and the absolute value of the difference is 1.0 or more. Specific examples of the material being 1.0 or more in an absolute value of the difference between the real part and the imaginary part in the complex refractive index include metal; inorganic semiconductors such as silicon, germanium and the like; conductive polymers such as polyacetylene, polypyrrole, polythiophene, poly-p-phenylene and the like, and organic conductive materials obtained by doping the conductive polymers using a dopant such as iodine, boron trifluoride, arsenic pentafluoride, perchloric acid and the like; organic-inorganic complex conductive materials obtained by drying a solution in which conductive metal particulates such as gold and silver are dispersed in insulating resin and the like. Among them, from the viewpoint of productivity and durability of the grid polarizer, metal materials are preferable. For efficient isolation of polarized light in a visible area, in each of the real part n and the imaginary part K in a complex refractive index at a temperature of 25°C and a wavelength of 550 nm, n of 4.0 or less, K of 3.0 or more, and the absolute value of the difference |n-K| of 1.0 or more are preferable, and n of 2.0 or less, K of 4.5 or more, and |n-K| of 3.0 or more are more preferable. Those in the referable range include silver, aluminum, chromium, indium, iridium, magnesium, palladium, platinum, rhodium, ruthenium, antimony and tin, and those in the more preferable range include aluminum, indium, magnesium, rhodium and tin. And, other than the above, materials in the range of n of 3.0 or more and K of 2.0 or less, preferably those with a range of n of 4.0 or more and K of 1.0 or less can be also used suitably. Such materials include silicon. A complex refractive index N is a theoretical relational expression in an electromagnetic wave and expressed as N = n - iK using the refractive index n of the real part and the extinction coefficient K of the imaginary part.

Though the detail is not known, the value of |n-K| has the following meaning. First, the case of n<K indicates that it is preferable that K is larger and n is smaller. The larger the K is, the larger the conductivity is, and since there are more free electrons capable of vibration in a direction of the layer A, an electric field generated by incidence of polarized light ((electrical field with) polarized light in a direction parallel with the layer A) is intensified, reflectance to the polarized light is increased. Since the width of the layer A is small, electrons can not move in a direction crossing the layer A, the above effect is not generated to the polarized light in the direction crossing the layer A but the light transmits. Also, since the wavelength of the incident light in the medium becomes larger if n is smaller, the size of a fine projection and recess structure, that is line width, pitch and the like, becomes relatively smaller and hard to be affected by scattering, diffraction or the like, and the light transmission (polarization in the direction crossing the layer A), reflectance (polarization in the direction parallel with the layer A) are improved. Here, the state of |n-K| being 1.0 or more indicates that the larger K and the smaller n are more preferable.

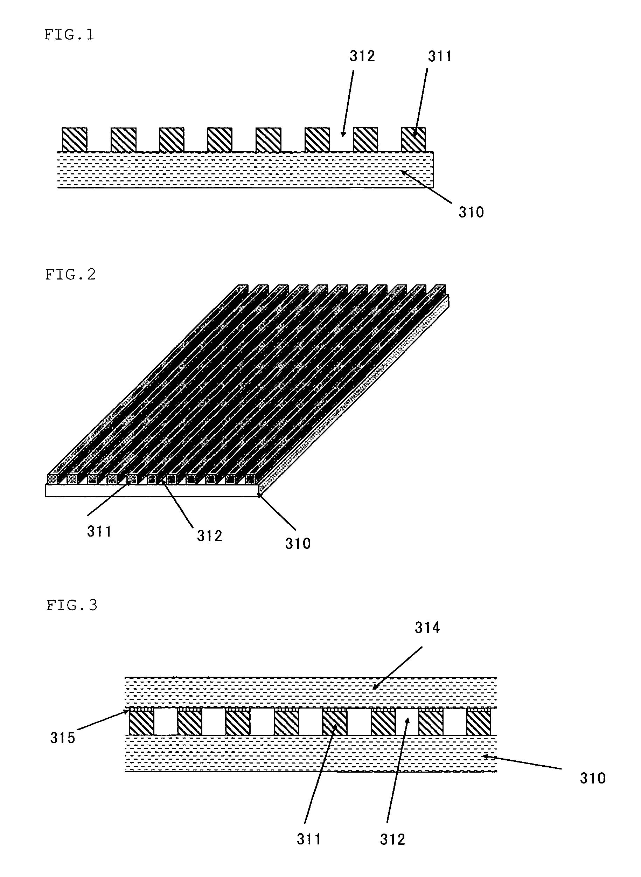

On the other hand, the case of n>K indicates that it is preferable that n is larger and K is smaller. The larger the n is, the larger a difference in refractive index n between the layer A and a portion adjacent to that (porous substance in Fig. 1) becomes, and structural birefringence easily occurs. On the other hand, if K is larger, light absorption becomes larger, and thus, it is preferable that K is smaller in order to prevent loss of light. Here, the fact that |n-K| is 1.0 or more indicates that it is preferable that n is larger and K is smaller.

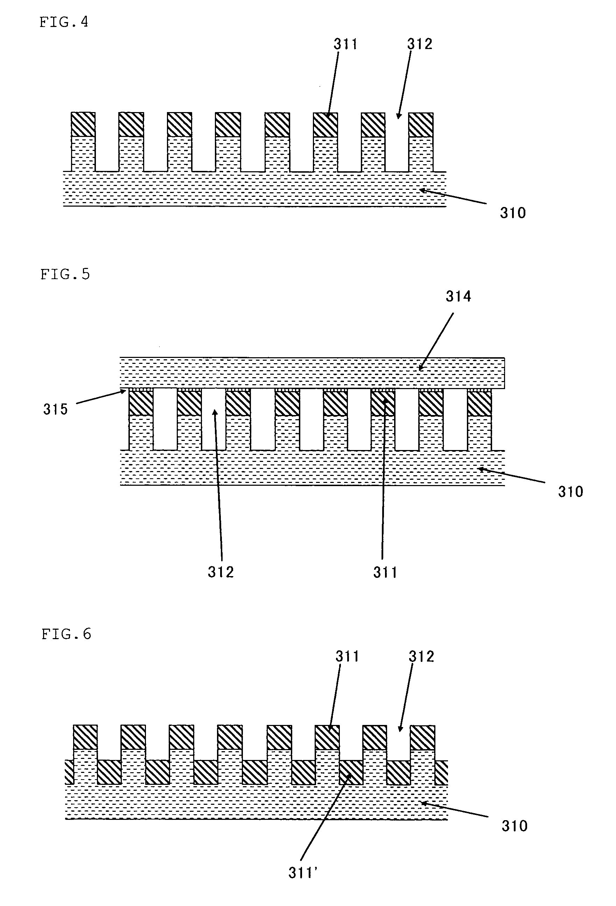

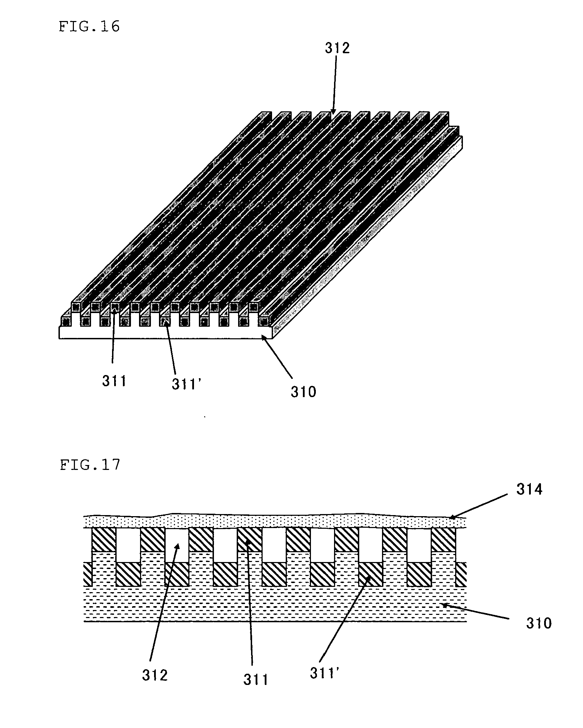

The layer A is extended in an elongated linear state and provided in plural separated side by side. For example, as shown in Fig. 6 and Fig. 16, on a top face of a ridge portion in a first layer 310 composed of a transparent material having a surface shape in which a plurality of the ridge portions extended in an elongated linear state are arranged side by side in a separated state, layer A 311 is laminated. The layer A has a pitch of 1/2 or less of the wavelength of light in use. The smaller the width and height of the layer A is, the smaller absorption of a polarized light component in the transmission direction becomes, which is preferable in characteristics. In a grid polarizer used for visible rays, the pitch of the layer A is usually 50 to 600 nm, the width of the layer A is usually 25 to 300 nm, and the height of the layer A is 10 to 500 nm. The layer A is usually extended longer than the wavelength of light and is preferably extended by 800 nm or more.

The layer B extended in an elongated linear state comprises a gas. The layer B may be a layer filled air or inert gas in a space framed by the first layer, the layers A and the third layer or a layer comprising a porous substance having a hollows filled with a gas.

The porous substance constituting the layer B is a material having a large number of fine hollows such as an aero gel, for example. The aero gel is a transparent porous body in which micro hollows are dispersed in a matrix. The size of the hollows is almost 200 nm or less, and a content of the hollows is usually 10 to 60 volume %, and preferably 20 to 40 volume %. The aero gel is classified into a silica aero gel and a porous body in which a hollow particulate is dispersed in a matrix.

The silica aero gel can be manufactured, as disclosed in U.S. Patent No. 4,402,927, U.S. Patent No. 4,432,956 and U.S. Patent 4,610,863, by moistening a gel compound having silica framework obtained by hydrolytic polymerization of alkoxysilane with a disperse or solvating medium such as alcohol or carbon dioxide and by removing the medium by supercritical drying. Also, silica aero gel can be manufactured similarly to the above with sodium silicate as a raw material as disclosed in U.S. Patent No. 5,137,279, and U.S. Patent 5,124,364.

In the present invention, as disclosed in Japanese Patent Laid-Open No. 5-279011 and Japanese Patent Laid-Open No. 7-138375 (U.S. Patent No. 5,496,527 corresponding thereto), it is preferable to give a hydrophobicity to silica aero gel by hydrophobizing of a gel compound obtained by hydrolysis and polymerization of alkoxysilane. With this hydrophobized silica aero gel to which moisture or water hardly intrudes, which can result in preventing degradation of performances of silica aero gel such as refractive index and light transmittance.

A porous body in which a hollow particulate is dispersed in a matrix includes porous bodies as disclosed in Japanese patent Laid-Open No. 2001-233611 and Japanese Patent Laid-Open No. 2003-149642.

The material used in the matrix is selected from materials satisfying conditions such as dispersibility of the hollow particulate, transparency of the porous body, strength of the porous body and the like. For example, polyester resin, acrylic resin, urethane resin, vinyl chloride resin, epoxy resin, melamine resin, fluorine resin, silicone resin, butyral resin, phenol resin, vinyl acetate resin, and hydrolytic organic silicon compounds such as alkoxysilane and the hydrolytic compounds thereof can be mentioned.
Among them, from the viewpoint of dispersibility of the hollow particulate and strength of the porous body, acrylic resin, epoxy resin, urethane resin, silicone resin, and hydrolytic organic silicon compounds and the hydrolytic compounds thereof are preferable.

The hollow particulate is not particularly limited but inorganic hollow particulates are preferable and silica hollow particulates are particularly preferable. Inorganic compounds constituting the inorganic hollow particulate include SiO₂, Al₂O₃, B₂O₃, TiO₂, ZrO2, SnO₂, Ce₂O₃, P₂O₅, Sb₂O₃, MoO₃, ZnO₂, WO₃, TiO₂-Al₂O₃, TiO₂-ZrO₂, In₂O₃-SnO₂, Sb₂O₃-SnO₂ and the like.

The outer shell of the hollow particulate may be porous having a fine pore or may be such that the fine pore is blocked and a cavity is sealed against the outside of the outer shell. The outer shell is preferably in a multi-layered structure composed of an inner layer and an outer layer. When a fluorine-containing organic silicon compound is used for forming the outer layer, the refractive index of the hollow particulate is lowered, dispersibility to the matrix is improved, and moreover, an advantage to apply antifouling property is obtained. Specific examples of fluorine-containing organic silicon compound include 3,3,3-trifluoropropyltrimethoxysilane, methyl-3,3,3-trifluoropropyldimethoxysilane, heptadecafluorodecylmethyldimethoxysilane, heptadecafluorodecyltrichlorosilane, heptadecafluorodecyltrimethoxysilane, tridecafluorooctyltrimethoxysilane, and the like.

The thickness of the outer shell is usually 1 to 50 nm, and preferably 5 to 20 nm. Also, the thickness of the outer shell is preferably within a range of 1/50 to 1/5 of an average particle size of the inorganic hollow particulate.

A solvent used when preparing the hollow particulate and / or a gas which intrudes during drying may be present in the cavity, or a precursor substance for forming the cavity may remain in the cavity.

The average particle size of the hollow particulate is not particularly limited but a range of 5 to 2,000 nm is preferable, and 20 to 100 nm is more preferable. The average particle size is number average particle size as measured by transmission electron microscope observation.

As for the porous substance comprised in the B layer in the present invention, the porous substances having smaller refractive index is more preferable since those can give the higher isolation property of polarized light, but those with a small refractive index is poor in mechanical strength. Thus, it is preferable to select those in which optical characteristics and mechanical strength can be balanced. The refractive index thereof is preferably 1.03 to 1.45, and more preferably 1.10 to 1.40.

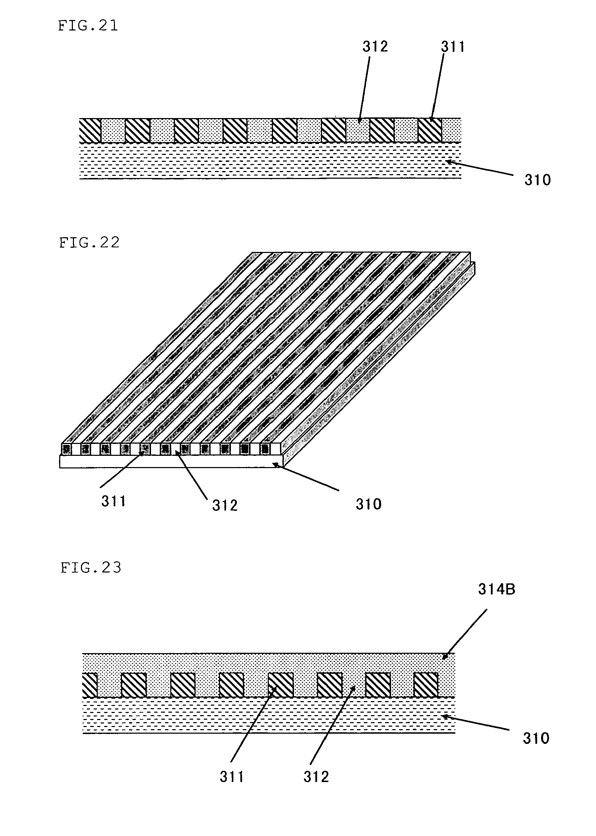

The layers A and the layers B are respectively extended in the elongated linear state, and alternately arranged side by side. For example, as shown in Figs. 21 and 22, on the first layer 310 composed of a transparent material, the layer A 311 and the layer B 312 are respectively laminated in the structure. The layers A and the layers B are arranged side by side in practically parallel. Here, practically parallel means that the layers A and the layers B do not cross each other and even if the pitch between the layers A is widened or narrowed, it falls within about ±5% of an average pitch, for example. The pitch of the layer A is 1/2 or less of the wavelength of the light in use. The smaller the width and the height of the layer A are, the smaller absorption of the polarized light component becomes in the transmission direction, which is preferable in characteristics. In the grid polarizer used for visible rays, the layer A usually has the pitch of 50 to 600 nm, the width of 25 to 300 nm, and the height of 10 to 500 nm. The layer A and the layer B are usually extended longer than the wavelength of the light, and preferably extended by 800 nm or more.

If the layer B is filled with air or an inert gas in a space framed by the first layer, the layers A and the third layer, the inert gas constituting the layer B includes nitrogen, argon and the like.

The layer A is connected to the first layer and / or the third layer through a chemical compound having a reactive group bindable with an inorganic material and a reactive group bindable with an organic material.
The chemical compound used for connecting the layer A, the first layer and / or the third layer is not particularly limited as long as it has a reactive group bindable with an inorganic material and a reactive group bindable with an organic material.
The reactive group bindable with the inorganic material in the chemical compound has a strong affinity with a material being 1.0 or more in an absolute value of a difference between a real part n and an imaginary part K in a complex refractive index (N = n - iK) comprised in the layer A. On the other hand, the reactive group bindable with the organic material has a strong affinity with a transparent material, particularly a transparent resin, constituting the first layer and / or the third layer. The connecting force between the layer A, the first layer and / or the third layer is enhanced by a chemical compound having the reactive group bindable with the inorganic material and the reactive group bindable with the organic material. Thus, in a thermo-compression usually carried out for connecting the layer A, the first layer and / or the third layer, a thermo-compression temperature can be lowered and a pressurizing force can be lowered. As a result, the space framed by the first layer, the layers A and the third layer can be prevented from being crushed and narrowed. The space (the layer B) framed by the first layer, the layers A and the third layer is filled with air or an inert gas, which is a low refractive-index substance, as will be described later, and if the space is ensured sufficiently wide as design values, the polarization degree of the grid polarizer is improved.

As the chemical compounds having the reactive group bindable with the inorganic material and the reactive group bindable with the organic group, silane coupling agents, titanate coupling agents, and aluminum coupling agents are known. Among them, the silane coupling agents are preferable since the coupling force with the inorganic materials and organic materials are large.
Specific examples of the coupling agents include amino group containing alkoxysilane such as N-(β-aminoethyl)-γ-aminopropyltrimethoxysilane, γ-aminopropyltrimethoxysilane, γ-aminopropyltriethoxysilane, and the like; epoxy group containing alkoxysilane such as γ-glycidoxypropyltriethoxysilane, γ-glycidoxypropyltrimethoxysilane, γ-glycidoxypropylmethyldimethoxysilane, and β-(3,4-epoxycyclohexyl)ethyltrimethoxysilane; acryloxy group containing alkoxysilane or methacryloxy group containing alkoxysilane such as γ-acryloxypropyltrimethoxysilane, γ-methacryloxypropyltrimethoxysilane, γ-acryloxypropyltriethoxysilane, γ-methacryloxypropyltriethoxysilane, and γ-methacryloxypropyltris(β-methoxyethoxy)silane; mercapto group containing alkoxysilane such as γ-mercaptopropyltrimethoxysilane, γ-mercaptopropyltrimethoxysilane, γ-mercaptomethyltrimethoxysilane, γ-mercaptomethyltriethoxysilane, and γ-mercaptohexamethyldisilazane; vinyl group containing alkoxysilane such as vinyltrimethoxysilane, vinyltriethoxysilane, vinyltris(β-methoxyethoxy)silane, vinyltrichlorosilane, and vinyltriacetoxysilane; isopropyltriisostearoyltitanate, isopropyltris(dioctylpyrophosphate)titanate, isopropyltri(N-aminoethyl-aminoethyl)titanate, bis(dioctylpyrophosphate)oxiacetatetitanate and the like.

The manufacturing method of the grid polarizer in the present invention comprises the step of forming a third layer bridging between the tops of adjacent layers A in a separate state by deposition of an inorganic oxide or an inorganic nitride onto the principal surface of a first layer from an oblique direction to block an opening of a groove portion located between the layers A.

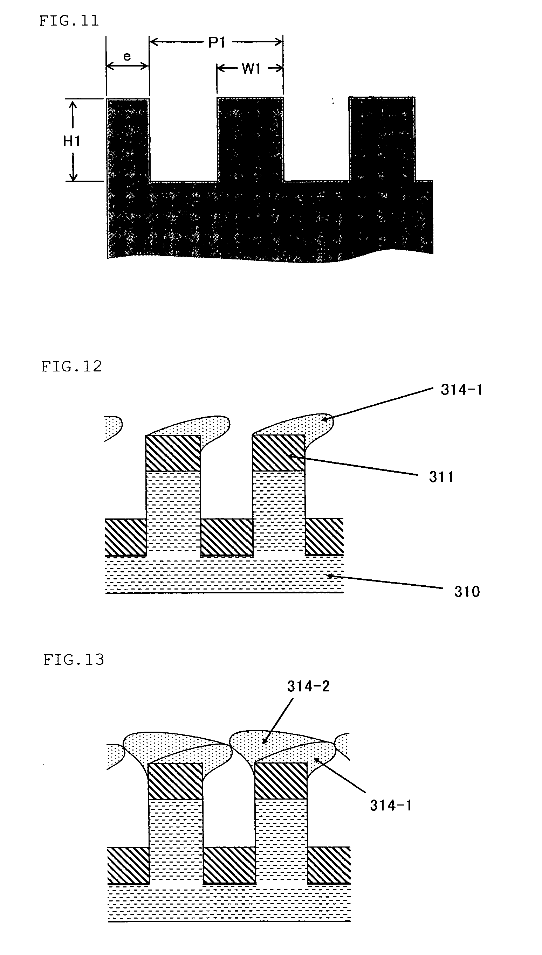

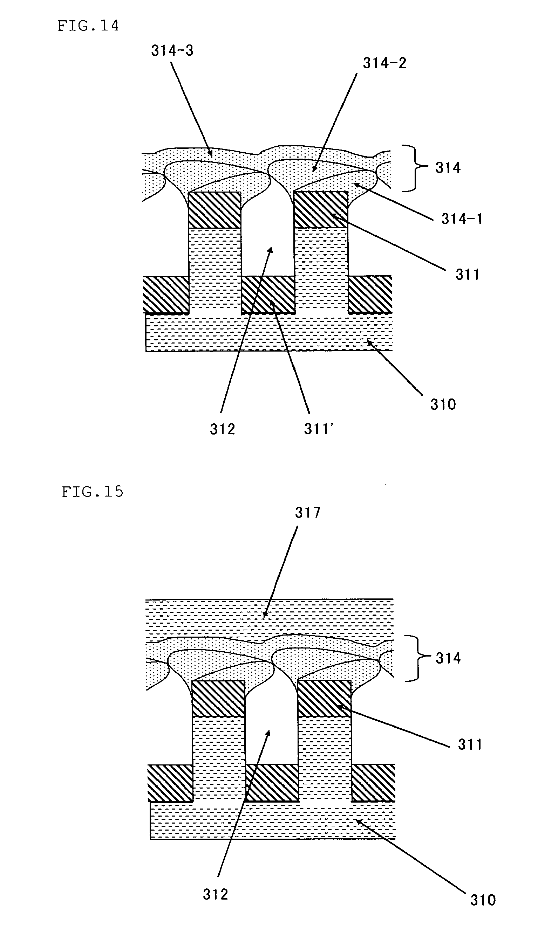

The deposition is carried out on the principal face of the first layer from the diagonal direction. Fig. 12 to Fig. 14 show an example of the step to form the third layer.
First, onto the layers A 311 arranged side by side separately, when diagonal deposition is carried out at an angle from an upper right direction on this paper in the figure, the inorganic oxide or inorganic nitride is accumulated on the upper right side on the top portion of the layers A, and as shown in Fig. 12, a deposition film 314-1 grows toward the upper right direction. Next, when diagonal deposition is carried out at an angle from the upper left direction on the paper, the inorganic oxide or inorganic nitride is accumulated on the upper left side on the top portion on the layers A, and as shown in Fig. 13, a deposition film 314-2 grows toward the upper left direction. And the deposition film 314-1 grown by the deposition from the upper right direction and the deposition film 314-2 grown by the deposition from the upper left direction approach each other and block the opening of the groove portion between the top portions of the adjacent layers A in the separated state. When the opening portion is blocked, as shown in Fig. 14, a deposition film 314-3 can grow on the deposition film 314-1 and the deposition film 314-2. By this diagonal deposition process, the third layer is formed, and the grid polarizer in which air or inert gas is filled in the space that is layer B framed by the first layer, the layers A and the third layer can be easily obtained.

### EFFECT OF THE INVENTION

The grid polarizer of the present invention has scratch durability, antifouling property, and sufficient flexibility and strength, which results in facilitating a handling when the grid polarizer is mounted on a liquid crystal display or the like. Also, if the grid polarizer of the present invention is installed between a liquid crystal panel and a backlight device in the liquid crystal display, light emission from the backlight can be effectively used and brightness on a display screen can be improved.

### BRIEF DESCRIPTION OF THE DRAWINGS

Fig. 1 is a sectional view illustrating a state before the third layer is laminated on the grid polarizer in a first embodiment of the present invention.
Fig. 2 is a perspective view illustrating a state before the third layer is laminated on the grid polarizer in the first embodiment of the present invention.
Fig. 3 is a sectional view illustrating the grid polarizer in the first embodiment of the present invention.
Fig. 4 is a sectional view illustrating a state before the third layer is laminated on the grid polarizer in a second embodiment of the present invention.
Fig. 5 is a sectional view illustrating the grid polarizer in the second embodiment of the present invention.
Fig. 6 is a sectional view illustrating a state before the third layer is laminated on the grid polarizer in a third embodiment of the present invention.
Fig. 7 is a sectional view illustrating the grid polarizer in the third embodiment of the present invention.
Fig. 8 is a view illustrating an example of a grinding tool used for manufacturing a transfer roll employed in manufacture of a grid polarizing layer.
Fig. 9 is a view illustrating an example of a step of forming a projection and recess shape on a resin film surface by the transfer roll.
Fig. 10 is a view illustrating an example of a continuous sputtering device.
Fig. 11 is a view illustrating an example of a tip-end structure in a grinding tool.
Fig. 12 is a view illustrating a state where the third layer is accumulated by diagonal deposition in the grid polarizer of the present invention.
Fig. 13 is a view illustrating a state where the third layer is accumulated by diagonal deposition in the grid polarizer of the present invention.
Fig. 14 is a view illustrating a state where the third layer is accumulated by diagonal deposition in the grid polarizer of the present invention.
Fig. 15 is a view illustrating a state where a fourth layer is laminated on the third layer in the grid polarizer of the present invention.
Fig. 16 is a perspective view illustrating a state before the third layer is laminated on the grid polarizer in a fourth embodiment of the present invention.
Fig. 17 is a sectional view illustrating the fourth embodiment of the grid polarizer of the present invention.
Fig. 18 is a sectional view illustrating a fifth embodiment of the grid polarizer of the present invention.
Fig. 19 is a sectional view illustrating a sixth embodiment of the grid polarizer of the present invention.
Fig. 20 is a sectional view illustrating a seventh embodiment of the grid polarizer of the present invention.
Fig. 21 is a sectional view illustrating an eighth embodiment of the grid polarizer of the present invention.
Fig. 22 is a perspective view illustrating the eighth embodiment of the grid polarizer of the present invention.
Fig. 23 is a sectional view illustrating a ninth embodiment of the grid polarizer of the present invention.
Fig. 24 is a sectional view illustrating a tenth embodiment of the grid polarizer of the present invention.
Fig. 25 is a sectional view illustrating an eleventh embodiment of the grid polarizer of the present invention.
Fig. 26 is a sectional view illustrating a twelfth embodiment of the grid polarizer of the present invention.
Fig. 27 is a sectional view illustrating a thirteenth embodiment of the grid polarizer of the present invention.
Fig. 28 is a sectional view illustrating a fourteenth embodiment of the grid polarizer of the present invention.
Fig. 29 is a sectional view illustrating a fifteenth embodiment of the grid polarizer of the present invention.
Fig. 30 is a sectional view illustrating a sixteenth embodiment of the grid polarizer of the present invention.
Fig. 31 is a view illustrating a conventional embedded-type wire grid polarizer.
Fig. 32 is a view illustrating a conventional embedded-type wire grid polarizer.

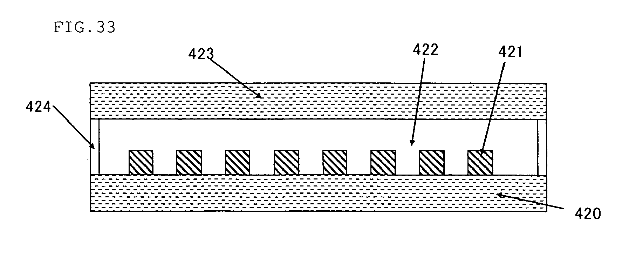

Fig. 33 is a view illustrating a conventional grid polarizer.

### EXPLANATION OF THE SYMBOLS

310: First layer
311: layer A
311': layer A'
312: layer B
314: Third layer
315: Connecting layer
317: Fourth layer

### BEST MODE FOR CARRYING OUT THE INVENTION

Embodiments of the present invention will be described below referring to the attached drawings.
Fig. 3 is a sectional view illustrating a first embodiment of a grid polarizer of the present invention. Figs. 1 and 2 are a sectional view and a perspective view of a state before a third layer 314 of the grid polarizer shown in Fig. 3 is laminated.
In the grid polarizer shown in Figs. 1 and 2, on a film-state first layer 310 composed of a transparent material such as a transparent resin, a layer A 311 comprising a material being 1.0 or more in an absolute value of a difference between a real part n and an imaginary part K in a complex refractive index (N = n - iK), such as aluminum or silicon, is laminated. The layer A 311 is provided, as shown in Fig. 2, on the surface of a first layer 310 extending in an elongated linear state. A method for forming the layer A 311 on the first layer 310 is not particularly limited but that can be realized by a photolithography method, for example. As an example of the photolithography method, there can be (1) a method of laminating a metal film on the first layer 310 by deposition, plating or the like, forming a photo-sensitive resist film on the metal film, curing the resist film conforming to a linear pattern by irradiating light having the linear pattern, removing an uncured portion, etching the metal film portion from which the resist film has been removed and removing the cured resist film in the end; and (2) a method of forming a photo-sensitive resist film on the first layer 310, curing the resist film conforming to a linear pattern by irradiating light having the linear pattern, removing an uncured portion, forming a metal film on the pattern-formed resist film by deposition, sputtering or the like, and removing the cured resist film in the end. A layer of a chemical compound having a reactive group bindable with an inorganic material and a reactive group bindable with an organic material may be formed on the first layer, and then the layer A may be formed on the layer.

In the grid polarizer in the first embodiment, as shown in Fig. 3, a connecting layer 315 composed of a chemical compound having a reactive group bindable with an inorganic material and a reactive group bindable with an organic material is provided on the top face of the layer A 311, and the third layer 314 made by a transparent material is laminated on the connecting layer 315. The connecting layer 315 can be obtained by a method of applying an embrocation comprising a chemical compound having a reactive group bindable with an inorganic material and a reactive group bindable with an organic material on the top face of the layer A 311, or a method of applying an embrocation comprising a chemical compound having a reactive group bindable with an inorganic material and a reactive group bindable with an organic material on an inner face of the third layer 314. An adhesive layer (not shown) may be laminated on the inner face of the third layer 314, and if the adhesive layer is provided, the third layer 314 and the layer A 311 can be bonded by bringing the adhesive layer and the connecting layer 315 into contact with each other.

In order to connect the layer A 311 and the third layer 314 through the connecting layer 315, thermo-compression are used preferably. A thermo-compression temperature is preferably not higher than a temperature at which the third layer 314 or the adhesive layer provided on the inner face of the third layer is molten. A pressure for thermo-compression is not particularly limited as long as it does not deform a structure of the layer A.

In the grid polarizer in the first embodiment, a space that is layer B 312 is formed among the first layer, the layers A and the third layer. The layer B 312 is filled with air or inert gas.

Fig. 5 is a sectional view illustrating a second embodiment of the grid polarizer of the present invention. Fig. 4 is a sectional view of a state before the third layer 314 of the grid polarizer shown in Fig. 5 is laminated.
As shown in Figs. 4 and 5, in the grid polarizer of the second embodiment, a plurality of ridge portions extending in an elongated linear state are formed side by side on the surface of the first layer 310 in a separated state, and the layer A 311 extended in the elongated linear state is provided on the top face of each of the ridge portions of the first layer along the ridge portion.

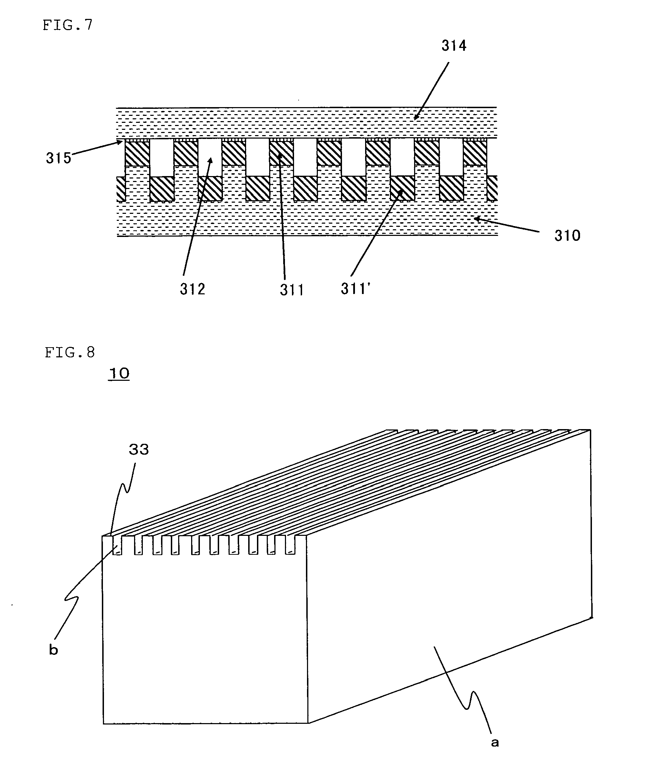

Fig. 7 is a sectional view illustrating a third embodiment of the grid polarizer of the present invention. Fig. 6 is a sectional view of a state before the third layer 314 of the grid polarizer shown in Fig. 7 is laminated.
As shown in Figs. 6 and 7, the grid polarizer in the third embodiment has a layer A' 311' comprising a material being 1.0 or more in an absolute value of a difference between a real part n and an imaginary part K in a complex refractive index (N = n - iK) is provided on a bottom face of a groove portion between the ridge portions in the first layer, extending in an elongated linear state along the groove portion in the grid polarizer of the second embodiment.

The layer A 311, the third layer 314 and the connecting layer 315 in the second embodiment and the third embodiment are the same as those described in the first embodiment.
The first layer in these embodiments is the same as that described in the first embodiment except that the ridge portion extended in the elongated linear state is provided on the surface.
A pitch of the ridge portions formed on the surface of the first layer, extending in the elongated linear state is preferably 50 to 600 nm, a width of the ridge portion is usually shorter than the wavelength of light, and preferably 25 to 300 nm, and height of the ridge portion is preferably 50 to 500 nm. The ridge portion extends in the linear state and its length is longer than the wavelength of light and usually 800 nm or more.

The first layer on which the ridge portion extended in the elongated linear state is not particularly limited by its manufacturing method. Suitable manufacturing methods of the first layer include transferring of the ridge portion extended in the linear state on a lengthy resin film surface using a transfer die or preferably a transfer roll having a groove portion extended in the linear state.

The transfer die or transfer roll used in this suitable manufacturing method is not particularly limited by the manufacturing method as long as the groove portion extended in the elongated linear state is provided on the transfer surface. For example, such a method can be cited that a material with Mohs hardness of 9 or more is machined using high energy ray so as to fabricate a tool with a projection with the width of 600 nm or less formed at the distal end, and a groove portion extended in the elongated linear state having a pitch of preferably 50 to 600 nm, a width of preferably 25 to 300 nm and a depth of preferably 50 to 500 nm is formed on the surface of a die member or roll member using the tool.

Fig. 8 is a view illustrating an example of a tool 10. A rectangular solid with Mohs hardness of 9 or more is machined by high energy ray, a groove is engraved on the surface at the distal end to form straight projections 33 with the width of 300 nm or less, or preferably 200 nm or less at the distal end. The straight projections are arranged in plural in parallel with a constant pitch in Fig. 8.

The shape of the projection formed at the distal end is not particularly limited but a section cut off on a plane perpendicular to the longitudinal of the straight projection can be for example, a rectangle, triangle, semicircle, trapezoid, or a shape obtained by slightly deforming them. Among them, those with a rectangular section are preferable since the layer A comprising a material being 1.0 or more in an absolute value of a difference between a real part n and an imaginary part K in a complex refractive index can be easily formed.
An arithmetic average roughness (Ra) of the projection formed at the distal end of the tool is preferably 10 nm or less, and more preferably 3 nm or less.

The projection that is ridge portion of the tool makes a groove portion on the surface of the die member or roll member, while the groove portion of the tool makes the ridge portion on the surface of the die member or roll member. When a grinding tool 10 with a projection section in a rectangle having width W1, pitch P1, and height H1 in Fig. 11 is used, a width W2 of a projection portion 11 on the surface of the die member or roll member is P1 - W1, a pitch P2 of the projection portion 11 is P1, and a height H2 of the projection portion 11 is H1 or less. Considering this relation and heat expansion at transfer, the tool shape corresponding to the groove portion shape to be formed on the surface of the die member or roll member can be determined. A width e of the projection at both side ends of the tool is preferably W1 - 25 < e < W1 + 25 (unit: nm) or e =0 so that a pitch at the machining joint portion has a set value.

As a material with Mohs hardness of 9 or more used in the tool, diamond, cubic boron nitride, corundum and the like are mentioned. These materials are preferably used in single crystal or sintered body. A single crystal is preferable in view of machining accuracy and tool life, a single-crystal diamond or cubic boron nitride is more preferable since they have higher hardness, and single-crystal diamond is particularly preferable. Sintered bodies include, for example, metal bond with cobalt, steel, tungsten, nickel, bronze or the like as a sintered material; and vitrified bond with feldspar, soluble clay, fireclay, frit and the like as a sintered material. Among them, diamond metal bond is suitable.

High energy ray used for manufacture of the tool includes laser beam, ion beam, electronic beam and the like. Among them, ion beam and electronic beam are suitable. In machining by ion beam, a method of irradiating ion beam while blowing an active gas such as fluorine and chlorine onto the surface of the material (called as ion-beam aided chemical machining) is preferable. In machining by electronic beam, a method of irradiating electronic beam while blowing an active gas such as oxygen gas onto the surface of the material (called as electronic-beam aided chemical machining) is preferable. By these beam aided chemical machining, etching rate is accelerated, re-adhesion of sputtered substances is prevented, and fine and highly accurate machining in the nanometer order can be carried out efficiently.

Using the tool 10 obtained as above, the groove portion extended in the elongated linear state along a peripheral face of the roll member is formed. The straight projection 11 of the tool 10 is pressed on the peripheral face of the roll member, and the roll member is rotated so as to cut or grind the peripheral face of the roll member.

The cutting or grinding of the die member or roll member is preferably carried out using a precision fine processing machine. The precision fine processing machine has moving accuracies of X, Y, Z axes preferably at 100 nm or less, more preferably 50 nm or less, and particularly preferably 10 nm or less. The precision fine processing machine is installed preferably in a room with vibration displacement of 0.5 Hz or more controlled at 50 µm or less, and more preferably in a room with vibration displacement of 0.5 Hz or more controlled at 10 µm or less for the above machining. The cutting or grinding of the die member or roll member is carried out preferably in a temperature-controlled room with a temperature controlled within ±0.5°C, and more preferably in a temperature-controlled room with a temperature controlled within ±0.3°C.

The die member or roll member used in the fine machining is not particularly limited but the surface of the die member or roll member is preferably composed of a material with an appropriate hardness such as a metal film formed by electrodeposition or electroless plating. The material to constitute the metal film is preferably such that a metal film with Vickers hardness of 40 to 350, and more preferably 200 to 300 can be obtained, specifically copper, nickel, nickel-phosphorous alloy, palladium and the like are mentioned and among them, copper, nickel, nickel-phosphorous alloy are preferable.

The tool 10 may be directly pressed onto the roll member so as to form the groove portion extended in the elongated linear state, but the transfer roll may be fabricated by a method in which the ridge portion extended in the elongated linear state is formed on a die, a metal plate is fabricated by electrocasting on the die, the metal plate is peeled off the die and the metal plate is affixed onto the peripheral face of the roll member.

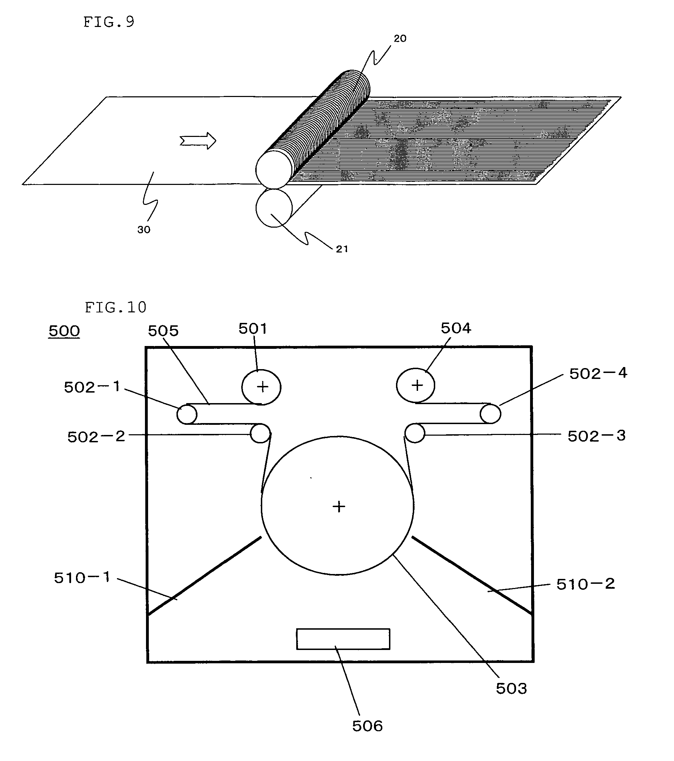

The ridge portion extended in the elongated linear state is formed on the resin film surface using the transfer die or transfer roll obtained by the above method or the like. Fig. 9 is a view illustrating an example of a process of forming the ridge portion extended in the elongated linear state on the surface of a resin film 30 by the transfer roll. In Fig. 9, the resin film 30 is pressed and held between a transfer roll 20 and a roll 21 on the opposite side with the resin film 30 between them so that the groove portion shape extended in the elongated linear state along the peripheral face of the transfer roll is transferred onto the resin film. The sandwiching pressure of the transfer roll and the roll on the opposite side is preferably several MPA to several tens of MPa. A temperature at the transfer is preferably Tg to (Tg + 100)°C when a glass transition temperature of the transparent resin constituting the resin film is Tg. A contact time between the resin film and the transfer roll can be adjusted by a feeding speed of the resin film that is a roll rotation speed, and is preferably 5 to 600 seconds.

Another method of forming the ridge portion extended in the elongated linear state on the resin film surface is a method of transferring the ridge portion extended in the elongated linear state by pressing a photosensitive transparent resin on the transfer die or transfer roll for exposure. Specifically, a photosensitive transparent resin solution is flow-casted, a solvent is removed, and then the transfer roll is pressed thereon and light is irradiated at the same time to harden the photosensitive transparent resin, which result in forming the ridge portion extended in the elongated linear state.

Next, the layer A 311 is formed on the top face of the ridge portion extended in the elongated linear state formed on the resin film surface. The layer A may be formed on the top face of the ridge portion and the layer A' on the bottom face of the groove portion between the ridge portions as shown in Fig. 6, or only the layer A may be formed on the top face of the ridge portion as shown in Fig. 4.

A method of forming the layer A and the layer A' is not particularly limited. Various coating methods using a vacuum film-forming process such as vacuum deposition, sputtering, ion plating and the like and a wet process such as micro-gravure, screen coat, dip coat, electroless plating, electro plating and the like can be used according to the material in use. Among them, the vacuum deposition and sputtering methods are preferable from the viewpoint of uniformity of the grid structure.

A case where the layer A and the layer A' are formed by the sputtering method will be exemplified below. Fig. 10 is a diagram illustrating an example of a continuous sputtering device. The device 500 in Fig. 10 is a direct-current magnetron sputtering device in which a resin film on which the ridge portion extended in the elongated linear state is formed can be attached to a feeding-out roll 501 and a metal to be deposited on a target 506 can be attached. A metal film is formed on the film surface by vacuuming a vacuum chamber, feeding out a film from the feeding-out roll 501, winding a film around a clean film-forming roll 503 and sputtering from the target 506. The film on which the metal film is formed is taken up by a take-up roll 504.

By inclining a direction of sputtering or depositing of the metal with respect to the ridge portion extended in the elongated linear state and formed on the film, a portion where the metal film is formed and a portion without the metal film are produced. For example, in the resin film on which the ridge portion extended in the elongated linear state is formed, sputtering or the like from the normal direction of the resin film forms the metal film on the top face of the ridge portion and the bottom face of the groove portion between the ridge portions, but the metal film is not formed on the side face of the ridge portion. Also, by sputtering or the like in a direction at a right angle to the direction in which the ridge portion extends and diagonally on the film face on the same resin film, the metal film is formed on the top face of the ridge portion and a face on the upper half on the one side face of the ridge portion, but the metal film is not formed on the bottom face of the groove portion between the ridge portions, lower half on one side face and the other side face on the ridge portion. Using the straightness of metal flowing by sputtering, the ridge portion, a groove portion between the ridge portions, the layer A and the layer A' arranged practically in parallel with each other can be easily obtained.

Fig. 17 is a sectional view illustrating a fourth embodiment of the grid polarizer of the present invention. Figs. 16 and 6 are a perspective view and a sectional view a state before a third layer 316 of the grid polarizer shown in Fig. 17 is laminated.
The grid polarizer shown in Fig. 17 has a plurality of ridge portions extended in the elongated linear state formed side by side on the surface of the first layer. The layer A 311 extended in the elongated linear state is provided along the ridge portion on each top face of the ridge portion. Also, the layer A' 311' extended in the elongated linear state is provided on the bottom face of the groove portion between the ridge portions along the groove portion, and moreover, a third layer 314 composed of an inorganic oxide or inorganic nitride is provided on the top face of the layer A.
The ridge portion extended in the elongated linear state formed on the surface of the first layer has a structure as shown in Figs. 4 and 6. A pitch of the ridge portions arranged side by side on the surface of the first layer is preferably 50 to 600 nm, a width of the ridge portion is usually shorter than the wavelength of light and preferably 25 to 300 nm and a height of the ridge portion is preferably 50 to 500 nm. The ridge portion is extended in the linear state and the length is longer than the wavelength of light and usually 800 nm or more.

The first layer having the ridge portion extended in the elongated linear state can be obtained by the method as described for the second or third embodiment.

Next, the layer A 311 comprising a material such as aluminum or silicon being 1.0 or more in an absolute value of a difference between a real part n and an imaginary part K in a complex refractive index (N = n - iK) is formed on the top face of the ridge portion extended in the elongated linear state formed on the resin film surface. The layer A may be formed on the top face of the ridge portion and the layer A' between the groove portions on the bottom face as shown in Fig. 6, or only the layer A may be formed on the top face of the ridge portion as shown in Fig. 4. Methods for forming the layer A and the layer A' are the same as described in the second or third embodiment.

Next, the third layer is formed on the layer A 311. The third layer can be obtained through a process shown in Figs. 12 to 14.
First, onto the layers A 311 arranged side by side separately, when diagonal deposition is carried out at an angle from an upper right direction on this paper in the figure, the inorganic oxide or inorganic nitride is accumulated on the upper right side on the top portion of the layers A, and as shown in Fig. 12, a deposition film 314-1 grows toward the upper right direction. Next, when diagonal deposition is carried out at an angle from the upper left direction on the paper, the inorganic oxide or inorganic nitride is accumulated on the upper left side on the top portion on the layers A, and as shown in Fig. 13, a deposition film 314-2 grows toward the upper left direction. And the deposition film 314-1 grown by the deposition from the upper right direction and the deposition film 314-2 grown by the deposition from the upper left direction approach each other and block the opening of the groove portion between the top portions of the adjacent layers A in the separated state. When the opening portion is blocked, as shown in Fig. 14, a deposition film 314-3 can grow on the deposition film 314-1 and the deposition film 314-2. By this diagonal deposition process, the third layer composed of an inorganic oxide or inorganic nitride is formed, and the grid polarizer in which air or inert gas is filled in the space that is layer B framed by the first layer, the layers A and the third layer can be easily obtained.

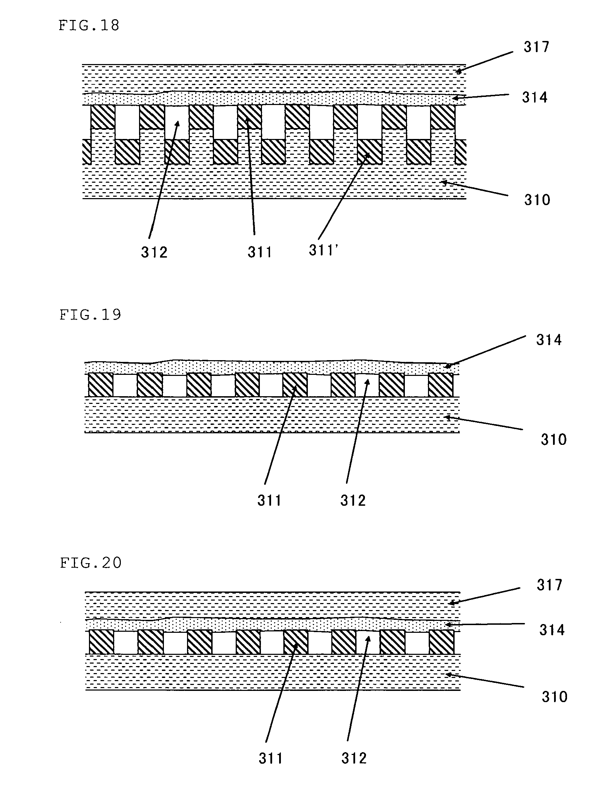

Fig. 18 is a sectional view illustrating a fifth embodiment of the grid polarizer of the present invention. The grid polarizer of the fifth embodiment has a fourth layer 317 laminated on the third layer of the grid polarizer of the fourth embodiment. Fig. 15 is a view illustrating a state where the fourth layer is laminated on the third layer composed of an inorganic oxide or inorganic nitride obtained by diagonal deposition.
The fourth layer 317 is preferably a sheet or film state. The fourth layer 317 is not limited by the structure in Fig. 18 but may be any layer composed of a transparent material.
The fourth layer is preferably a layer which can transmit light, and materials constituting that include, for example, cellulose esters such as cellulose acetate, cellulose acetate butyrate, cellulose propionate and the like; layers composed of a transparent resin such as polycarbonate, polyolefin, polystyrene, polyester and the like; organic-inorganic complex layers such as organoalkoxysilane, inorganic colloidal acryl and the like; inorganic layers composed of silicon nitride, aluminum nitride, silicon oxide and the like. The fourth layer is preferably composed of a resin from the viewpoint of flexibility.

A method of laminating the fourth layer is not particularly limited but the methods of forming the fourth layer include a method of lamination by bonding the film-state fourth layer, a method of forming the fourth layer by applying a coating agent comprising a composition for forming the fourth layer and curing it by drying, heat or light, a vacuum deposition method, an ion plating method, a sputtering method and the like. The thickness of the fourth layer is not particularly limited. Specifically, it is 50 nm to 500 µm.

Fig. 19 is a view illustrating a sixth embodiment of the grid polarizer of the present invention. Fig. 1 is a view illustrating a state before the third layer is laminated on the grid polarizer shown in Fig. 19. The structure shown in Fig. 1 is as described in the first embodiment.
As shown in Fig. 1, the grid polarizer has the layer A 311 laminated on the film-state first layer 310 composed of a transparent material such as a transparent resin. The layer A 311 is extended in the elongated linear state on the surface of the first layer 310.

In the grid polarizer in the sixth embodiment, the third layer 314 is provided on the top face of the layer A 311. The third layer 314 composed of an inorganic oxide or inorganic nitride can be formed by the same method as that described in the fourth embodiment, and a space that is layer B 312 is formed among the first layer, the layers A and the third layer. The layer B 312 is filled with air or inert gas.

Fig. 20 is a sectional view illustrating a seventh embodiment of the grid polarizer of the present invention. The grid polarizer of the seventh embodiment has the fourth layer 317 laminated on the third layer of the grid polarizer of the sixth embodiment. The fourth layer is the same as described in the fifth embodiment.

Figs. 21 and 22 are views illustrating an eighth embodiment of the grid polarizer of the present invention. Fig. 22 is a perspective view of the grid polarizer and Fig. 21 is a sectional view of the grid polarizer shown in Fig. 22.
In the grid polarizer shown in Figs. 21 and 22, on the film 310 composed of a transparent material such as a transparent resin, the layer A 311 comprising a material such as aluminum or silicon being 1.0 or more in an absolute value of a difference between a real part n and an imaginary part K in a complex refractive index (N = n - iK) is laminated. The layer A is extended in the elongated linear state on the surface of the film 310, as shown in Fig. 22. A method for forming the layer A 311 on the film 310 is not particularly limited but that can be realized by a photolithography method, for example. As an example of the photolithography method there can be, (1) a method of laminating a metal film on the film by deposition, plating or the like, forming a photosensitive resist film on the metal film, curing the resist film conforming to a linear pattern by irradiating light having the linear pattern, removing an uncured portion, etching the metal film portion from which the resist film has been removed and removing the cured resist film in the end; and (2) a method of forming a photo-sensitive resist film on the film, curing the resist film conforming to a linear pattern by irradiating light having the linear pattern, removing an uncured portion, forming a metal film on the pattern-formed resist film by deposition, sputtering or the like, and removing the cured resist film in the end.

In the grid polarizer in the eighth embodiment, the layer B 312 is formed in the groove portion between the layers A. The layer B comprises a porous substance. Specific examples of the porous substance include a silica aero gel and a porous substance in which a hollow particulate is dispersed in a matrix. A gas is usually filled in a hollows of the porous substance.
A method to form the layer B 312 is not particularly limited but an isopropanol dispersed sol of the hollow silica particulate is added to a methanol solution of silicone resin so as to prepare an embrocation, and the embrocation is made to flow into the groove portion between the layers A using a wire bar coater or the like, dried and then, heat-treated under an oxygen atmosphere so as to form the layer B.

Fig. 23 is a view illustrating a ninth embodiment of the grid polarizer of the present invention. The grid polarizer in the ninth embodiment has a structure in which a layer composed of a porous substance that is a third layer 314B is laminated in which the third layer continues into the layer B 312 of the grid polarizer of the eighth embodiment without a boundary. For the porous substance constituting the third layer, the same substance as exemplified as the porous substance comprised in the layer B can be used. Though the layer composed of the porous substance is used as the third layer in the ninth embodiment, a layer composed of a substance with a low refractive index may be used as the third layer. The third layer 314B can be formed by the same method in which the layers B are formed. For example, the third layer can be obtained by coating to cover the layers A with the said embrocation that is made to flow into the groove portion in between the layers A in order to form the layer B.

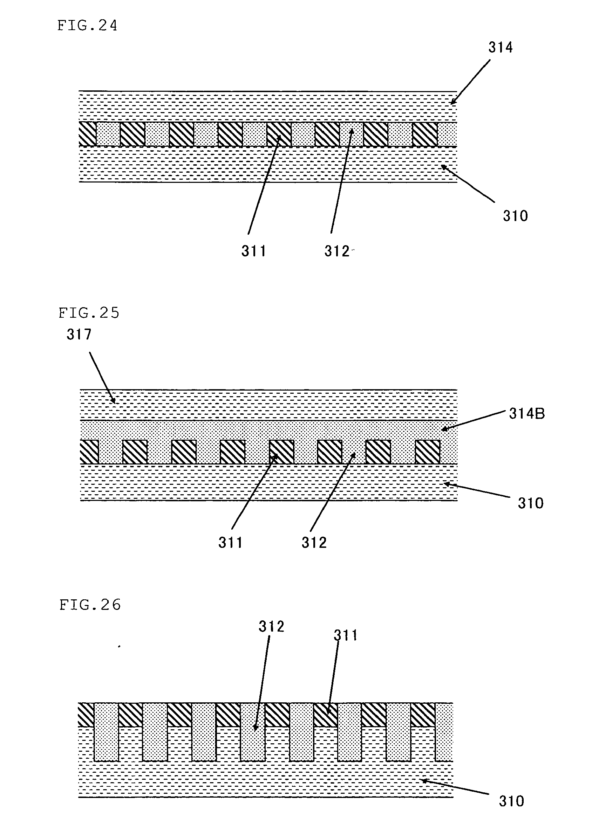

Fig. 24 is a view illustrating a tenth embodiment of the grid polarizer of the present invention. The grid polarizer in the tenth embodiment has a structure that the layer A 311 and the layer B 312 of the grid polarizer of the eighth embodiment is sandwiched by the film 310 as the first layer and the film as the third layer 314.
The third layer may be composed of a transparent material. The third layer 314 is preferably a layer which can transmit light, and materials constituting that include, for example, cellulose esters such as cellulose acetate, cellulose acetate butyrate, cellulose propionate and the like; layers composed of a transparent resin such as polycarbonate, polyolefin, polystyrene, polyester and the like; organic-inorganic complex layers such as organoalkoxysilane, inorganic colloidal acryl and the like; inorganic layers composed of silicon nitride, aluminum nitride, silicon oxide and the like. The third layer is preferably composed of a resin from the viewpoint of flexibility.
The third layer is preferably a layer which can transmit light. A method of laminating the third layer is not particularly limited but the methods include a method of lamination by bonding the film-state third layer, a method of forming the third layer by applying a coating agent comprising a composition for forming the third layer and curing it by drying, heat or light, a vacuum deposition method, an ion plating method, a sputtering method and the like. In the tenth embodiment, the thickness of the third layer is not particularly limited. Specifically, it is 0.1 µm to 500 µm.

Fig. 25 is a view illustrating an eleventh embodiment of the grid polarizer of the present invention. The grid polarizer in the eleventh embodiment has a structure in which the fourth layer 317 is further laminated on the third layer 314B of the grid polarizer in the ninth embodiment. The fourth layer is the same as those described in the fifth embodiment.

Fig. 26 is a view illustrating a twelfth embodiment of the grid polarizer of the present invention. In the grid polarizer in the twelfth embodiment, a plurality of ridge portions extended in the elongated linear state are formed side by side on the surface of the first layer 310 in a separated state, the layer A extended in the elongated state is provided on the top face of each of the ridge portions along the ridge portion and the layer B 312 extended in the elongated linear state is arranged so as to fill the groove portion formed between the adjacent layers A and the ridge portions.

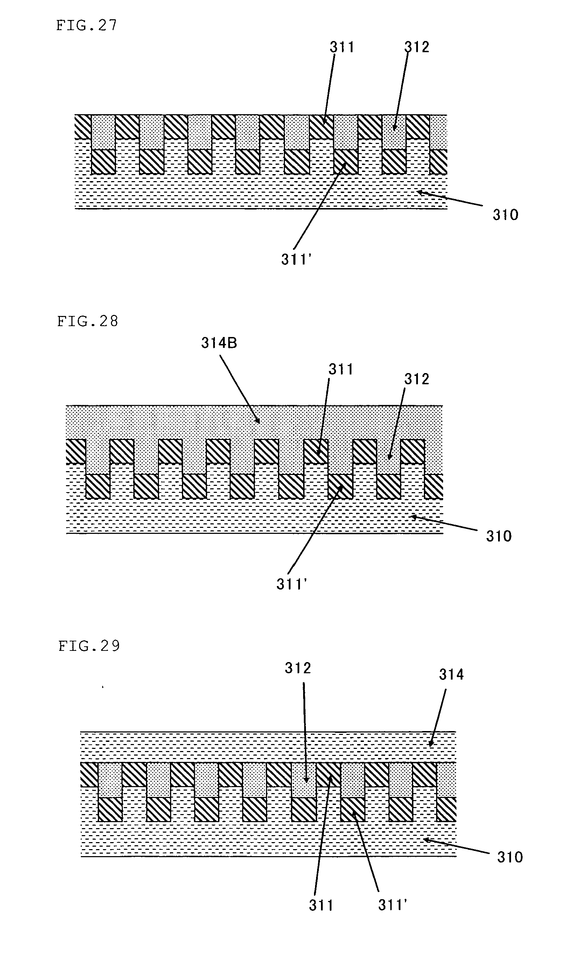

Fig. 27 is a view illustrating a thirteenth embodiment of the grid polarizer of the present invention. In the grid polarizer in the thirteenth embodiment, the layer A' 311' extended in the elongated linear state is further provided on the bottom face of the groove portion in the twelfth embodiment. The layer A' 311' is the same as the layer A 311.

The first layer 310, the layer A 311, and the layer A' 311' in the twelfth embodiment and thirteenth embodiment are the same as described in the third embodiment. The layer B is the same as described in the eighth embodiment.

Fig. 28 is a view illustrating a fourteenth embodiment of the grid polarizer of the present invention. The grid polarizer in the fourteenth embodiment has a structure in which the third layer 314B composed of a porous substance is laminated in which the third layer continues into the layer B of the grid polarizer of the thirteenth embodiment without a boundary. The third layer is the same as described in the ninth embodiment.

Fig. 29 is a view illustrating a fifteenth embodiment of the grid polarizer of the present invention. The grid polarizer in the fifteenth embodiment has a structure in which the third layer 314 composed of a porous substance is laminated on the layer A and the layer B of the grid polarizer of the thirteenth embodiment. The third layer is the same as those described in the tenth embodiment.

Fig. 30 is a view illustrating a sixteenth embodiment of the grid polarizer of the present invention. The grid polarizer in the sixteenth embodiment has a structure in which the fourth layer 317 is further laminated on the third layer 314 of the grid polarizer in the fourteenth embodiment. The fourth layer is the same as those described in the fifth embodiment.

The polarizing element of the present invention comprises a laminate of the said grid polarizer and another polarizing optical element. Another polarizing optical element can be an absorbing-type polarizer, phase-difference polarizer, polarization diffraction element and the like. When the polarizing element of the present invention is used as a brightness-improved element in the liquid crystal display, another polarizing optical element is preferably the absorbing-type polarizer.

The absorbing-type polarizer used in the present invention is a type in which one of two linearly polarized lights crossing each other at a right angle is transmitted, while the other is absorbed. For example, a polarizer obtained by having iodine or diachronic substance such as diachronic dye adsorbed to a hydrophilic polymer film such as polyvinyl alcohol film, ethylene vinyl acetate partially saponified film and the like and then, uniaxially drawing the film; or the one obtained by having the hydrophilic polymer film uniaxially drawn and adsorbing a diachronic substance; a polyene oriented film such as a dehydrated substance of polyvinyl alcohol, dehydrochlorinated substance of polyvinyl chloride and the like. The thickness of the absorbing-type polarizer is usually 5 to 80 µm.

The grid polarizer and the absorbing-type polarizer are preferably laminated so that a polarizing transmission axis of the grid polarizer and a polarizing transmission axis of the absorption-type polarizer are practically parallel. By this arrangement, natural light can be efficiently converted to linearly polarized light. The practically parallel here means within a range of ±5° from the parallel direction.

The polarizing element of the present invention is not particularly limited by the manufacturing method. For example, there is a method of bringing the grid polarizer and another polarizing optical element into close contact while the lengthy grid polarizer wound in the roll state and another lengthy polarizing optical element wound in the roll state are taken up from the rolls at the same time. An adhesive may be interposed on a close contact surface between the grid polarizer and another polarizing optical element. Methods of bringing the grid polarizer and another polarizing optical element include a method of pressing and sandwiching the grip polarizer and another polarizing optical element at a nip of the two rolls arranged in parallel.

A liquid crystal display of the present invention comprises the grid polarizer or the polarizing element. The liquid crystal display comprises a liquid crystal panel which can change a polarizing transmission axis by adjustment of voltage and two absorbing-type polarizers arranged holding it between them. In order to transmit light into the liquid crystal panel, on the back side of a display surface, a backlight device is provided in the transmission-type liquid crystal display or a reflector is provided in the reflection-type liquid crystal display.

The grid polarizer of the present invention has a nature of transmitting one of linearly polarized lights crossing each other while reflecting the other. Also, the polarizing element of the present invention has a nature of transmitting one of linearly polarized lights crossing each other while reflecting the other when transmitting light from the grid polarizer side. In the transmission-type liquid crystal display of the present invention, when the grid polarizer and the polarizing element of the present invention in which the grid polarizer of the polarizing element is arranged on the backlight side is arranged between the backlight device and the liquid crystal panel, the light emitted at the backlight device is isolated by the grid polarizer into two linearly polarized lights, one of which goes toward the liquid crystal panel, the other linearly polarized light returns toward the backlight device. The backlight device is usually provided with the reflector, and the linearly polarized light returning toward the backlight device is reflected by the reflector and returns to the grid polarizer again. The returned light is isolated by the grid polarizer into two polarized lights again. By repeating this, the light emitted at the backlight device is effectively used. As a result, light such as backlight can be efficiently used for image display of the liquid crystal display, and the screen can be made brighter. Also, in the reflection-type liquid crystal display, the screen can be made brighter with the same principle.

### EXAMPLES

Examples and comparative examples are shown below in order to describe the present invention in more detail, but the present invention is not limited to the following examples. Also, parts and % refer to weight standards unless otherwise specified.

### (Grinding tool)

On a face of 0.2 mm × 1 mm of rectangular single-crystal diamond with the dimension of 0.2 mm × 1 mm × 1mm brazed to a shank of 8 mm × 8 mm × 60 mm made by SUS, argon ion beam was irradiated for cutting and a groove with the width of 70 nm and the depth of 130 nm with a pitch of 150 nm was engraved in parallel with a side with the length of 1 mm so as to fabricate a grinding tool comprising about 1300 linear projections with the width of 80 nm and the height of 130 nm with a pitch of 150 nm.

### (Transfer roll)

On the peripheral surface of a roll made by stainless steel SUS430 with the diameter of 200 mm and the length of 150 mm, nickel-phosphorous electroless plating with the thickness of 100 µm was applied. Then, the grinding tool fabricated in advance with linear projections was mounted on the precision cylindrical grinding machine, and a straight ridge portion extending in the roll peripheral direction with the width of 70 nm, height of 130 nm and pitch of 150 nm was formed by the grinding machine on the nickel-phosphorous electroless plated face of the roll so as to obtain a transfer roll.
The fabrication of the grinding tool by the focused ion beam machining and grinding of the nickel-phosphorous electroless plated face were carried out in a constant-temperature and low-vibration room in which a temperature was at 20.0±0.2°C and displacement by vibration of 0.5 Hz or more was controlled at 10 µm or less by a vibration control system.

### Comparative Example 1 (Grid polarizer 0)

Using a transfer device provided by a nip roll made of a rubber roll with a diameter of 70 mm and the above transfer roll, by transferring a projection and recess shape on the transfer roll surface onto a surface of a cycloolefin polymer film with a thickness of 100 µm (product name: ZEONOR film ZF-14, produced by Optes Inc.) under a condition of a surface temperature of the transfer roll at 170°C, the surface temperature of the nip roll at 100°C, feeding tension of the film at 1MPa, and a nip pressure of 15 MPa, a film having the ridge portion extended straight with the width of 75 nm, height of 120 nm and pitch of 150 nm in parallel with a flow direction of the film was fabricated.

Then, by vacuum deposition of aluminum from the normal direction on a face of the film on which the ridge portion was formed, the layer A and the layer A' composed of aluminum with the thickness of 50 nm were formed on top face of the ridge portion and the bottom face of the groove portion between the ridge portions. This grid polarizer was cut into a predetermined shape so as to obtain three pieces of sheet-state grid polarizer 0 as shown in Figs. 6 and 16.

Then, a light guide plate, a light diffusion sheet, and the grid polarizer were sequentially laminated and a linear-shape light source was installed on an end face of a polarizing plate so as to obtain a polarized light source device. On this polarized light source device, an absorbing-type polarizing plate A was mounted so that its polarizing transmission axis was in parallel with the polarizing transmission axis of the grid polarizer, and moreover a transmission type TN liquid crystal panel was mounted, and another absorbing-type polarizing plate B was mounted on that (so that the polarizing transmission axis of the polarizing plate B orthogonally-crosses that of the absorbing-type polarizing plate A) so as to obtain a liquid crystal display. Initial front brightness of the obtained liquid crystal display was measured using a brightness meter (product name: BM-7, by Topcon Co.). The result is shown in Table 1.

One end of the second grid polarizer was set at a fixing jig with the other end at a movable jig, the movable jig was moved so that the grid polarizer was bent at an angle of ±150 degrees (the state where the grid polarizer is flat is 0 degree), in which a operation of bending at -150 degrees and bending at +150 degrees made one cycle (operation speed was 2 seconds / cycle), and the operation was carried out for 200 cycles. Even after bending for 200 cycles, no abnormality such as peeling-off was visually found in the grid polarizer. The liquid crystal display was assembled similarly to the above using the grid polarizer after bending for 200 cycles and the front brightness after bending was measured. The result is shown in Table 1.

With the surface on which the layer A of the third grid polarizer was formed, a steel wool #0000 was brought into contact with a load of 0.02 MPa and reciprocated 20 times on the entire surface so as to rub the whole surface of the grid polarizer. Abnormality such as a fine scratch was visually found in the grid polarizer after rubbing with the steel wool, and reflectance or transmission was fluctuated in a plane. The liquid crystal display was assembled similarly to the above using the grid polarizer after rubbing with the steel wool, and the front brightness was measured after friction. The result is shown in Fig. 1.

### (Hard coat agent)

So as to obtain an ultraviolet curable hard coat agent, 30 parts of 6-functional urethane acrylate oligomer (product name: NK Oligo U-6HA, by Shinnakamura chemical co., ltd.), 40 parts of butyl acrylate, 30 parts of isobornyl methacrylate, and 10 parts of 2,2-dimethoxy-l,2-diphenylethane-l-on were mixed by a homogenizer.

### Example 1

The grid polarizer 0 was obtained by the same manner as the Comparative Example 1. On the face of the grid polarizer 0 on which the layer A was formed, SiO₂ was deposited from a direction at a right angle to a direction in which the layer A extended and inclined by +75° with respect to the normal line of the grid polarizer 0 (upper right direction on the paper in Fig. 6). The SiO₂ deposition film had accumulated on the side face and the top face of the layer A and grown in the upper right direction on the paper as shown in Fig. 12.
Next, SiO₂ was deposited from a direction at a right angle to a direction in which the layer A extended and inclined by -60° with respect to the normal line of the grid polarizer 0 (upper left direction on the paper in Fig. 12). The SiO₂ deposition film had accumulated on the side face and the top face of the layer A and grown in the upper left direction on the paper as shown in Fig. 13. Finally, SiO₂ was deposited from the normal direction of the grid polarizer 0 (exactly above on the paper in Fig. 13). The fact that SiO₂ deposition film was accumulated with an average thickness of 60 nm from the top face of the layer A as shown in Fig. 14, bridged across the both top portions of the layer A and blocked an opening of the groove portion between the layers A was confirmed by a transmission electron microscope. The SiO₂ deposition film was also accumulated on the side face of the layer A, and the amount occupies 15% of the groove portion volume between the layers A of the grid polarizer 0. The space closed by the SiO₂ deposition film (85% of the groove portion volume: layer B) was occupied by air.

Next, on the surface on the side where the SiO₂ deposition film was formed, the hard coat agent was applied using a bar coater so that the film thickness after curing became 5 µm. Then, it was dried at 80°C for five minutes, ultraviolet ray was irradiated (integrated light amount 300 mJ/cm²) so as to cure the hard coat agent, and a grid polarizer 1 was obtained.

No abnormality such as peeling-off or scratch was visually found in the grid polarizer 1 after bending for 200 cycles and rubbing by a steel wool. The liquid crystal display was assembled using the grid polarizer 1 by the same manner as Comparative Example 1 and the brightness was measured. The result is shown in Table 1.

### Comparative Example 2

The grid polarizer 0 was obtained by the same manner as Comparative Example 1. A transparent thermoplastic resin film (product name: ZEONOR film, by Optes Inc.) composed of a cycloolefin polymer with a thickness of 80 µm on which a urethane acrylate adhesive with refractive index of 1.48 was applied was thermo-compressed on the layer A in the grid polarizer 0 under a condition of vacuuming for 15 seconds, temperature at 80°C, the thermo-compression pressure of 1MPa, and a holding time of 300 seconds so as to fabricate three pieces of grid polarizers 2.
The groove portion on the surface of the grid polarizer 0 was filled with the urethane acrylate adhesive. No abnormality such as peeling-off was visually found in the grid polarizer 2 after bending for 200 cycles similarly to Example 1. Fine scratches were visually found in the grid polarizer 2 after rubbing by the steel wool. The liquid crystal display was assembled using the grid polarizer 2 by the same manner as Example 1, and the brightness was measured. The result is shown in Table 1.

### Comparative Example 3

The front brightness of the liquid crystal display was measured in a state where the grid polarizer 1 was not arranged in Example 1. The result is shown in Table 1.

[Table 1]

**Table 1**

| Grid Polarizer | | Filler Substance between second layers | | Outermost Layer | Visual Observation | | Front Brightness | | |
|---|---|---|---|---|---|---|---|---|---|
| | | | Refractive Index | | After Bending | After Rubbing | Initial | After Bending | After Rubbing |
| Comp. Ex. 1 | 0 | Air | 1 | Al | No abnormality | Scratch | 276 | 274 | 223 |
| Ex. 1 | 1 | Air · SiO₂ | 1 | HD | No abnormality | No abnormality | 265 | 262 | 265 |
| Comp. Ex. 2 | 2 | UA | 1.48 | Resin | No abnormality | Scratch | 237 | 238 | 229 |
| Comp. Ex. 3 | - | - | - | - | - | - | 206 | - | - |

Abbreviations in the Table are Al = aluminum, HD = hard coat layer, UA = urethane acrylate adhesive, Air = air, and SiO₂ = deposition film.

From the above results:
1) it is known that since the base material is a resin film, any of the cases (including Comparative Examples) has bending resistance and performance is not deteriorated during a process of "bending" in machining;
2) In Example, the space that is layer B walled by the first layer, the layers A and the third layer is maintained, and the space that is the layer B is filled with air. As compared with the front brightness in a case where the grid polarizer is not used (Comparative Example 3), the brightness is higher. Also, the front brightness is rarely deteriorated even after rubbing by the steel wool. It is known that performance is not deteriorated at all by friction or the like occurring inadvertently during assembly into a liquid crystal display;
3) Comparative Example 1 has the largest initial brightness. However, it is known that the front brightness is drastically lowered after rubbing; and
4) In Comparative Example 2, the groove portion in a fine structure is filled with a substance with large refractive index. The initial brightness is lower. And it is known that brightness deterioration after rubbing by the steel wool is large.

### (Resin for adhesive layer)

In a reactor provided with a condenser tube, a nitrogen gas introducing pipe and a dripping funnel, 201g of hydrogenated product of ring-opening polymer with 9-methyl-tetracyclo[6.2.1.1^{3,6}.0^{2,7}]dodeca-3-ene (Tg=140°C, hydrogenation ratio = about 100%, Mn = about 28000), 6.37g of maleic anhydride, and 470.4g of t-butylbenzene were inputted and heated to 135°C under a N₂ gas atmosphere so as to dissolve the hydrogenated product of the ring-opening polymer. Into this solution in a state maintained at 135°C, a solution in which 1.76g of dicumyl peroxide was dissolved in 33.4g of cyclohexanone was dropped over 2 hours. The temperature of 135°C was maintained for another 3 hours for maleic-modification reaction. The reaction solution was cooled to a room temperature and diluted by adding 2 liter of toluene. Then, in a mixed solvent of 7 parts by volume of isopropyl alcohol and 2 parts by volume of acetone, the solution diluted as above was dropped so as to coagulate the resin, which was filtered and collected. The collected resin was vacuum-dried at 105°C for 12 hours so as to obtain the resin for adhesive layer.

### (Film for third layer)

20g of the above resin for adhesive layer was dissolved in 80g of cyclopentylmethylether (CPME, boiling point : 106°C) and filtered by a 1-µm filter so as to obtain a resin solution with viscosity of 130cP. This resin solution was coated on a transparent thermoplastic resin film with the film thickness of 80 µm (product name: ZEONOR film, by Optes Inc.) using a doctor blade for 100-µm film thickness. Then, it was dried at 110°C for 15 minutes under a nitrogen gas flow so as to obtain a film having the adhesive layer with the thickness of 5 µm.

### Example 2

The grid polarizer 0 was obtained by the same manner as Comparative Example 1. On the face of the grid polarizer 0 on which the layer A was formed, an aminopropyltriethoxysilane 0.2% solution (ethanol : water = 4 : 1 weight ratio) was applied and dried at 150°C for 2 minutes. Then, the grid polarizer 0 and the said film for third layer were laminated so that the adhesive layer of the film for third layer was in contact with the layer A of the grid polarizer 0, and thermo-compressed by a vacuum laminator (produced by SANKI Co.) so as to fabricate three pieces of a grid polarizer 3. Conditions at thermo-compression was a vacuuming for 15 seconds, thermo-compression temperature at 80°C, the thermo-compression pressure of 1 MPa, and a holding time of 300 seconds.

It was confirmed in a sectional observation of the grid polarizer 3 by a transmission electron microscope that only an aluminum thin film layer that is layer A formed on the top face of the ridge portion of the grid polarizer 0 was laminated in a state in contact with the adhesive layer of the film for third layer, and the space that is layer B framed by the first layer, the layers A and the third layer was not blocked by the adhesive but the space that is the layer B about 100% as designed was ensured. Also, the space that is the layer B communicated with the outside air.
No abnormality such as peeling-off was visually found in the grid polarizer 3 after bending for 200 cycles. Fine scratches were visually found in the grid polarizer 3 after rubbing by the steel wool. The liquid crystal display was assembled using the grid polarizer 3 by the same manner as Comparative Example 1 and the brightness was measured. The result is shown in Table 2.

### Example 3

The grid polarizer 3 was obtained by the same manner as Example 2. Next, the hard coat agent was applied on the film for third layer of the grid polarizer 3 using a bar coater so that the film thickness after curing became 5 µm. Then, it was dried at 80°C for 5 minutes, ultraviolet ray was irradiated (integrated light amount 300 mJ/cm²) so as to cure the hard coat agent, and a grid polarizer 4 was obtained.

No abnormality such as peeling-off or scratch was visually found in the grid polarizer 4 after bending for 200 cycles and rubbing by the steel wool. The liquid crystal display was assembled using the grid polarizer 4 by the same manner as Example 2 and the brightness was measured. The result is shown in Table 2.

[Table 2]

**Table 2**

| Grid Polarizer | | Filler Substance between second layers | | Outermost Layer | Visual Observation | | Front Brightness | | |
|---|---|---|---|---|---|---|---|---|---|
| | | | Refrac -tive Index | | After Bending | After Rubbing | Initial | After Bending | After Rubbing |
| Comp. Ex. 1 | 0 | Air | 1 | Al | No abnormality | Scratch | 276 | 274 | 223 |
| Ex. 2 | 3 | Air | 1 | Resin | No abnormality | Scratch | 274 | 272 | 261 |
| Ex. 3 | 4 | Air | 1 | HD | No abnormality | No abnormality | 272 | 273 | 271 |
| Comp. Ex. 2 | 2 | UA | 1.48 | Resin | No abnormality | Scratch | 237 | 238 | 229 |

Abbreviations in the Table are Al = aluminum, HD = hard coat layer, UA = urethane acrylate adhesive, and Air = air.

From the above results:
In the Examples of the present invention, the space (layer B) framed by the first layer, the layers A and the third layer was maintained, and the space (layer B) was filled with air. As compared with the front brightness in a case where the grid polarizer was not used (Comparative Example 3), the brightness was higher. Also, the front brightness was rarely deteriorated even after rubbing by the steel wool. Though a scratch might be caused at rubbing by the steel wool in some Examples, sufficient brightness was kept and it is known that performance was not deteriorated any more by friction or the like occurring inadvertently during assembly into a liquid crystal display.

### (Silicon alkoxide solution I)

Oligomer of tetramethohxysilane (product name: methyl silicate 51, by Colcoat Co., Ltd.) and methanol were mixed at mass ratio of 47 : 78 to prepare a liquid A. Also, water, ammonia water (28 weight %), and methanol were mixed at a weight ratio of 60 : 1.2 : 97.2 to prepare a liquid B. And the liquid A and the liquid B were mixed at a mass ratio of 16 : 17 so as to prepare the silicon alkoxide solution I.

### (Silicon alkoxide solution II)

A silicon alkoxide solution II was prepared similarly to the above silicon alkoxide solution I except that the mass ratio between oligomer of tetramethoxysilane and methanol was changed to 47 : 71.

### Example 4

On the face on which the layer A of the grid polarizer 0 was formed, the silicon alkoxide solution I was spin-coated with conditions of a rotation speed at 500 rpm for 5 seconds in a methanol atmosphere. After the coating, it was left for 1 minute and 15 seconds so as to form a thin film of gelled silicon alkoxide. This gelled thin film was dipped in a curing solution with a composition in which water, 28%-ammonia water and methanol were mixed at a mass ratio of 162 : 4 : 640 and left at a room temperature for 24 hours. This thin film was dipped in a 10%-isopropanol solution of hexamethyldisilazane so as to hydrophobize the thin film. Then, the hydrophobized thin film was dipped in isopropanol to be washed.

Moreover, the thin film was placed in a highpressure vessel and liquid carbon dioxide was filled in the vessel and supercritically dried under conditions of 80°C, 16 MPa and 2 hours so as to form a silica aero gel thin film I (the layer B and the third layer) with a structure having a large number of hollows in a net structure of silica gel and to obtain three pieces of grid polarizer 5. The refractive index of the silica aero gel thin film I was 1.39. The refractive index was calculated from measurement values obtained by measurement at a wavelength of 589 nm and incident angles 55, 60 and 65 degrees, respectively, using a spectro-ellipsometer (model number: M-2000U, made by J.A. Woollam co.). The silica aero gel thin film I had a thickness of 240 nm from the layer A formed on the top face of the ridge portion extended in the elongated linear state, and the groove portion formed between the adjacent layers A and the ridge portions was filled with the silica aero gel I.

No abnormality such as peeling-off or scratch was visually found in the grid polarizer after bending for 200 cycles and rubbing by the steel wool. The liquid crystal display was assembled using the grid polarizer 5 similarly to Comparative Example 1 and the brightness was measured. The result is shown in Table 3.

### Example 5

Three pieces of grid polarizers 6 were obtained similarly to Example 4 except that a silicon alkoxide solution II was used instead of the silicon alkoxyde solution I used in Example 4. The silica aero gel thin film II was in a structure having a large number of hollows in the net structure of the silica gel and its refractive index was 1.22. The silica aero gel thin film II had a thickness of 220 nm from the layer A formed on the top face of the ridge portion extended in the elongated linear state, and the groove portion formed between the adjacent layers A and the ridge portions was filled with the silica aero gel II. No abnormality such as peeling-off was found in the grid polarizer after bending for 200 cycles as in Example 4. Fine scratches were visually found in the grid polarizer after rubbing by the steel wool. The liquid crystal display was assembled using the grid polarizer 6 similarly to Example 4 and the brightness was measured. The result is shown in Table 3.

### Example 6

A grid polarizer 6 was obtained similarly to Example 5, and on the silica aero gel thin film II, the silica aero gel thin film I was formed similarly to Example 4 so as to fabricate three pieces of grid polarizer 7.
A boundary between the silica aero gel thin film I and the silica aero gel thin film II can not be discriminated. A layer in which the silica aero gel thin film I and the silica aero gel thin film II were combined had a thickness of 370 nm from the layer A formed on the top face of the ridge portion formed in the elongated linear state, and the groove portion formed between the adjacent layers A and the ridge portions was filled with the silica aero gel II. No abnormality such as peeling-off or scratch was visually found in the grid polarizer after bending for 200 cycles and rubbing by the steel wool similarly to Example 4. The liquid crystal display was assembled using the grid polarizer 7 similarly to Example 4 and the brightness was measured. The result is shown in Table 3.

### Example 7

A grid polarizer 6 was obtained similarly to Example 5, and on the silica aero gel thin film II, the hard coat agent was applied using a bar coater so that the film thickness after curing became 5 µm. Then, it was dried at 80°C for 5 minutes, ultraviolet ray was irradiated (integrated light amount 300 mJ/cm²) so as to cure the hard coat agent, and three pieces of the grid polarizer 8 with hard coat layer were obtained.
The hard coat agent was cured in a state permeating inside from the surface of the silica aero gel thin film II by about 130 nm, and the hard coat layer was about 5 µm including the permeated portion. The groove portion formed between the adjacent layers A and the ridge portions in the grid polarizer 8 was filled with the silica aero gel II. Abnormality such as peeling-off or scratch was not visually found in the grid polarizer after bending for 200 cycles and rubbing by the steel wool similarly to Example 4. Using the grid polarizer 4, the liquid crystal display was assembled similarly to Example 4 and the brightness was measured. The result is shown in Table 3.

### Example 8

The grid polarizer 6 was obtained similarly to Example 5, and on the silica aero gel thin film II, triacetylcellulose film with a thickness of 80 µm was bonded through a urethane acrylate adhesive (refractive index : 1.48) so as to fabricate three pieces of the grid polarizer 9.
The urethane acrylate adhesive penetrated inside from the surface of the silica aero gel thin film II by about 40 nm. The groove portion formed between the adjacent layers A and the ridge portions of the grid polarizer 9 was filled with the silica aero gel II. No abnormality such as peeling-off was found in the grid polarizer after bending for 200 cycles similarly to Example 4. Fine scratches were visually found in the grid polarizer after rubbing by the steel wool. The liquid crystal display was assembled using the grid polarizer 9 similarly to Example 4 and the brightness was measured. The result is shown in Table 3.

### Comparative Example 4

On the face on which the layer A of the grid polarizer 0 was formed, triacetylcellulose film with a thickness of 80 µm was bonded through a urethane acrylate adhesive (refractive index : 1.48) so as to fabricate three pieces of the grid polarizer 10.
The groove portion formed between the adjacent layers A and the ridge portions of the grid polarizer 10 was filled with the urethane acrylate adhesive. No abnormality such as peeling-off was found in the grid polarizer 10 after bending for 200 cycles similarly to Example 4. Fine scratches were visually found in the grid polarizer after rubbing by the steel wool. The liquid crystal display was assembled using the grid polarizer 10 similarly to Example 4 and the brightness was measured. The result is shown in Table 3.

[Table 3]

**Table 3**

| Grid Polarizer | | Layer B | | Outermost Layer | Visual Observation | | Front Brightness | | |
|---|---|---|---|---|---|---|---|---|---|
| | | | Refrac -tive Index | | After Bending | After Rubbing | Initial | After Bending | After Rubbing |
| Ex. 4 | 5 | Si1 | 1.39 | Si1 | No abnormality | No abnormality | 256 | 257 | 252 |
| Ex. 5 | 6 | Si2 | 1.22 | Si2 | No abnormality | Scratch | 267 | 265 | 257 |
| Ex. 6 | 7 | Si2 | 1.22 | Si1 | No abnormality | No abnormality | 263 | 265 | 263 |
| Ex. 7 | 8 | Si2 | 1.22 | HD | No abnormality | No abnormality | 259 | 255 | 254 |
| Ex. 8 | 9 | Si2 | 1.22 | TAC | No abnormality | Scratch | 262 | 261 | 249 |
| Comp. Ex. 4 | 10 | UA | 1.48 | TAC | No abnormality | Scratch | 235 | 234 | 222 |

Abbreviations in the Table are Al = aluminum, Si1 = silica aero gel I, Si2 = silica aero gel II, HD = hard coat layer, TAC = triacetylcellulose, UA = urethane acrylate, and Air = air.

From the above results:
In Examples of the present invention, the groove portion in a fine structure on the surface is filled with a porous substance (silica aero gel) with small refractive index. As compared with the brightness in a case where the grid polarizer is not used (Comparative Example 3), the brightness is remarkably improved. Also, lowering of the brightness after rubbing by the steel wool is restricted. Though a scratch might be caused at rubbing by the steel wool in some Examples, sufficient brightness is kept and it is known that performance is not deteriorated any more by friction or the like occurring inadvertently during assembly into a liquid crystal display.
In Comparative Example 4, the groove portion in the fine structure is filled with a substance with large refractive index. The initial brightness is low. Also, it can be seen that the decrease in brightness after rubbing by the steel wool is significant.

## Claims

1. A grid polarizer comprising:
a first layer composed of a transparent material, a third layer composed of a transparent material, and a second layer between the first layer and the third layer, wherein
the second layer has a plurality of layers A extended in an elongated linear state and a plurality of layers B extended in an elongated linear state, in which the layers A and the layers B are alternately arranged side by side, the layers A comprise a material being 1.0 or more in an absolute value of a difference between a real part n and an imaginary part K in a complex refractive index (N = n - iK), and the layers B comprise a gas; and
the third layer is connected to the layers A through a chemical compound having a reactive group bindable with an inorganic material and a reactive group bindable with an organic material, comprises a transparent inorganic oxide or a transparent inorganic nitride, or comprises a porous substance.

2. A grid polarizer comprising:
a first layer composed of a transparent material, a third layer composed of a transparent material, and a second layer between the first layer and the third layer, wherein
the first layer has a plurality of ridges on the surface thereof in which the ridges are extended in an elongated linear state and are arranged side by side and separately from each other;
the second layer has a layer A extended in an elongated linear state on the top of each of the ridges and along the ridges, and a layer B extended in an elongated linear state in the groove walled between the adjacent layers A and the ridges, in which the layers A and the layers B are alternately arranged side by side, the layers A comprise a material being 1.0 or more in an absolute value of a difference between a real part n and an imaginary part K in a complex refractive index (N = n - iK), and the layers B comprise a gas; and
the third layer is connected to the layers A through a chemical compound having a reactive group bindable with an inorganic material and a reactive group bindable with an organic material, comprises a transparent inorganic oxide or a transparent inorganic nitride, or comprises a porous substance.

3. The grid polarizer according to claim 2, further comprising a layer A' extended in an elongated linear state on the bottom of each of the grooves, in which the layers A' comprise a material being 1.0 or more in an absolute value of a difference between a real part n and an imaginary part K in a complex refractive index (N = n - iK).

4. The grid polarizer according to any one of claims 1 to 3, wherein the layers B comprise a porous substance which has hollows filled with a gas.

5. The grid polarizer according to claim 4, wherein the third layer comprises a porous substance, and the third layer continues into the layers B without a boundary.

6. The grid polarizer according to any one of claims 1 to 4, wherein the third layer comprises a resin.

7. The grid polarizer according to any one of claims 1 to 6, further comprising a fourth layer comprising a resin, wherein the first layer, the second layer, the third layer, and the fourth layer are laminated in this order.

8. The grid polarizer according to any one of claims 1 to 3, wherein the layer B is a layer filled with air or inert gas in a space framed by the first layer, the layers A and the third layer.

9. The grid polarizer according to claim 8, wherein the third layer comprises an inorganic oxide or an inorganic nitride.

10. The grid polarizer according to any one of claims 1 to 9, wherein the layer A is connected to the first layer and / or the third layer through the chemical compound having a reactive group bindable with an inorganic material and a reactive group bindable with an organic material.

11. The grid polarizer according to any one of claims 1 to 10, wherein the first layer comprises a resin.

12. A polarizing element comprising a laminate of the grid polarizer according to any one of claims 1 to 11 and another polarizing optical element.

13. The polarizing element according to claim 12, wherein the another polarizing optical element is an absorption-type polarizer in which a polarizing transmission axis of the grid polarizer and a polarizing transmission axis of the absorption-type polarizer are practically parallel.

14. A liquid crystal display comprising the grid polarizer according to any one of claims 1 to 11.

15. A manufacturing method of a grid polarizer comprising air or inert gas filled in a space framed by a first layer, layers A and a third layer which comprises steps of:
forming a plurality of the layers A comprising a material being 1.0 or more in an absolute value of a difference between a real part n and an imaginary part K in a complex refractive index (N = n - iK), in which the layers A are extended in an elongated linear state and separately arranged side by side on the principal surface of the first layer composed of a transparent material; and
forming the third layer bridging between the tops of the adjacent layers A in a separate state by vapor-deposition of an inorganic oxide or an inorganic nitride onto the principal surface of the first layer from an oblique direction.

16. A manufacturing method of a grid polarizer comprising air or inert gas filled in a space framed by a first layer, layers A and a third layer which comprises steps of:
forming the layer A comprising a material being 1.0 or more in an absolute value of a difference between a real part n and an imaginary part K in a complex refractive index (N = n - iK) on the top face of a ridge and along the ridge in which a plurality of the ridges are extended in an elongated linear state arranged side by side on the surface of the first layer composed of a transparent material, and
forming the third layer bridging between the tops of the adjacent layers A in a separate state by vapor-deposition of an inorganic oxide or an inorganic nitride onto the principal surface of the first layer from an oblique direction.
